# EUROPEAN PATENT SPECIFICATION

(11) **EP 4 044 353 B1**
(45) Date of publication and mention of the grant of the patent: **24.05.2023**
(21) Application number: 21156485.1
(22) Date of filing: 11.02.2021
(51) Int. Cl.: H01M 50/503, H01M 50/507, H01M 50/51, H01M 50/516, H01M 50/533, H01M 50/54, H01M 50/521

(54) **ASSEMBLY SET FOR ASSEMBLING A CARRIER FRAMEWORK FOR A STACK OF BATTERY CELL BLOCKS**
BAUSATZ ZUM ZUSAMMENBAU EINES TRÄGERGERÜSTS FÜR EINEN STAPEL VON BATTERIEZELLENBLÖCKEN
JEU D'ASSEMBLAGE POUR L'ASSEMBLAGE D'UN CADRE PORTEUR POUR UN EMPILEMENT DE BLOCS DE CELLULES DE BATTERIE

(43) Date of publication of application: 17.08.2022
(73) Proprietor: Samsung SDI Co., Ltd., Yongin-si, Gyeonggi-do 17084 (KR)
(72) Inventor: Pucher, Matthias, 8403 Lebring (AT); Hadler, Bernhard, 8073 Feldkirchen/Graz (AT)
(74) Representative: Gulde & Partner

(56) References cited:
- EP-A1- 3 686 956
- EP-A1- 3 709 388
- US-A1- 2013 230 761
- US-A1- 2014 322 581

## Description

### Field of the Invention

The present invention relates to an assembly set for assembling a carrier framework for a stack of battery cell blocks, wherein the assembly set comprises a Z-shaped busbar. The invention further relates to an assembly set for assembling a stack of battery cells comprising the assembly set for assembling a carrier framework for a stack of battery cell blocks according to invention. Also, the invention relates to battery cell stack composed of the assembly set for assembling a stack of battery cells and a method of manufacturing such a battery cell stack.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like. In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e. g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e. g. an electric vehicle. Thus, the replacement of defect system parts, e. g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e. g. in the mechanic's workshop, of the bulky battery systems becomes difficult.

The design of state-of-the-art battery cell stacks, in particular for cylindrical battery cells, mostly comprise one or more structural parts such as injection molded plastic parts, which are shaped like egg-crates as well as parts for the electric connection between the cells. The latter parts are often referred to as "busbars" and are manufactured out of simple electric conductive sheet-metal plates. The joining technique for the cell may be fulfilled in several ways. However, these techniques often require an alternating orientation of the cells or cell bricks (parallel connected cell-blocks), which are connected in serial. This alternating assembly is mainly caused due to the fact that on the major side of the cell, the clearance between the cell's main terminal (e. g., the PLUS-terminal) and the opposite potential (e. g., the MINUS-terminal), rather the cell can itself, is quite small such that there is no packageefficient possibility to join sheet-metal busbars on only a single side of a cell. Currently, one of the industry standards is the use of wire bonding as joining technology or to increase generally the space between each cell and especially between the serial connected cell bricks. However, with an alternating orientation, the behavior in case of a venting event (e. g., a thermal run-away) is always critical. The implementation of an appropriate cooling system for the battery cell stack may thus become complex too, as it often requires two cooling plates on both, top and bottom sides of the cells.

It is thus an object of the present invention to overcome or reduce at least some of the drawbacks of the prior art and to provide a battery cell stack, an assembly set for assembling a battery cell stack, a method for assembling a battery cell stack, and an assembly set for assembling a carrier framework for a stack of battery cell blocks.

EP 3 686 956 A1 discloses a battery module including a bus bar for increasing weldability between the bus bar and an electrode terminal of a cylindrical battery cell, increasing a heat dissipation efficiency, and reducing current loss. The battery module includes: cylindrical battery cells; a module housing; and a bus bar, wherein the bus bar includes: a main body portion that is positioned at a top or a bottom of the plurality of cylindrical battery cells and has a plate shape having upper and lower surfaces that are broader than a lateral surface of the main body portion in a horizontal direction; and a contact portion that is configured to electrically contact and be connected to an electrode terminal formed in one of the plurality of cylindrical battery cells, extends and protrudes from the main body portion in a horizontal direction, is stepped from the main body portion in a direction toward where the electrode terminal is positioned, and includes a branched structure bifurcated in two directions with respect to a direction in which the contact portion extends and protrudes from the main body portion, wherein an embossed protrusion protruding toward where the electrode terminal is positioned is formed in the branched structure, and a contact area is set to allow a welding rod to establish electrical connection around the embossed protrusion in the branched structure.

### Summary of Invention

Embodiments of the present disclosure seek to solve at least one of the problems existing in the prior art to at least some extent. In particular, an assembly set for assembling a carrier framework for a stack of battery cell blocks is provided, the assembly set comprising: one or more Z-shaped busbars; a first frame beam and a second frame beam; wherein each of the Z-shaped busbars comprises: a positive plate configured for connecting to the positive terminals of the battery cells of a battery cell block; a negative plate configured for connecting the negative terminals of the battery cells of a further battery cell block; and a connection plate connecting the positive and the negative plate; wherein each of the Z-shaped busbars further comprises: a first fastening means configured for being fastened to the first frame beam; and a second fastening means configured for being fastened to the second frame beam; and wherein the first frame beam comprises one or more first fastening elements such that all of the one or more Z-shaped busbars can, at the same time, be connected with the respective first fastening means of the Z-shaped busbars to the first frame beam; wherein the second frame beam comprises one or more second fastening elements such that all of the one or more Z-shaped busbars can, at the same time, be connected with the respective second fastening means of the Z-shaped busbars to the second frame beam. In a state when each Z-shaped busbar is connected, with the positive plate of this Z-shaped busbar, to the positive terminals of the battery cells of one of the battery cell blocks and is further connected, with the negative plate of this Z-shaped busbar, to the negative terminals of the battery cells of another one of the battery cell blocks, the first frame beam is connectable to each of the Z-shaped busbars, and the second frame beam is connectable to each of the Z-shaped busbars. The connection plate of each of the Z-shaped busbars is configured for separating a pair of battery cell blocks, when one battery cell block of the pair of battery cell blocks is connected to the positive plate of the Z-shaped busbar and the other battery cell block of the pair of battery cell blocks is connected to the negative plate of the Z-shaped busbar.

The expression "Z-shaped" denotes in the present context that a Z-shaped busbar exhibits a profile or cross-section, which at least approximately reassembles the letter Z, wherein the lower bar and the upper bar of the letter Z correspond to the cross-sections of the positive plate and the negative plate, respectively, and the line connecting the lower bar with the upper bar in the letter Z corresponds to the cross-section of the connection plate. Note, however, that the expression "Z-shaped" as used in the present context shall also cover or encompass cases, wherein in said profile or cross-section of the Z-shaped busbar, the cross-section of the positive plate and the cross-section of the connection plate are positioned to each other in an angle of 90° or more (in any case, however, in an angle smaller than 180°), and/or wherein in said profile or cross-section of the Z-shaped busbar, the cross-section of the negative plate and the cross-section of the connection plate are positioned to each other in an angle of 90° or more (in any case, however, in an angle smaller than 180°). Specifically, the expression "Z-shaped" concerning busbars in the context of the present invention shall refer to busbars being formed such that the positive plate and the negative plate protrude away - in opposite directions - from the connection plate.

In preferred embodiments of the assembly set according to the invention, the positive plate, the negative plate and/or the connection plate have a rectangular shape. Preferably, the Z-shaped busbar is shaped such that the positive plate and the negative plate are positioned parallel to each other. In embodiments, wherein the positive plate and the negative plate of a Z-shaped busbar are positioned parallel to each other, the connection plate may be positioned perpendicular to each of the positive plate and the negative plate. Thereby, one edge of the rectangular-shaped connection plate may connect to one edge of the likewise rectangular-shaped positive plate, and the opposite edge of the connection plate may connect to one edge of the rectangular-shaped negative plate such that the positive plate protrudes from the connection plate in a direction opposite to the direction, in which the negative plate protrudes from the connection plate.

In preferred embodiments, the Z-shaped busbars are shaped identically.

The battery cell blocks (which are not part of the above-described assembly set) each comprise a bundle of battery cells. The battery cells of a battery block are each orientated in the same direction, i. e., there is a predefined direction such that for all battery cells of the battery cell block, both the positive terminal and the negative terminal of the battery cell are positioned on one straight line parallel to this direction, and viewed in that direction, the negative terminal is positioned behind the positive terminal. Further, the positive terminals of the battery cells of a battery cell block may all abut against the same (virtual) plane perpendicular to said direction. Also, the negative terminals of the battery cells of a battery cell block may all abut against the same (virtual) plane perpendicular to said direction. Of course, the plane against which the positive terminals abut is different from the plane against which the negative terminals abut; the body of each of the battery cells extends between these two planes.

The side of a battery cell block, at which all the positive terminals of the battery cells of the battery cell block are arranged is referred to as "the positive side of the battery cell block" in the following. Correspondingly, the side of a battery cell block, at which all the negative terminals of the battery cells of the battery cell block are arranged is referred to as "the negative side of the battery cell block" in the following.

The body of each of the battery cells in a battery cell block may have a cylindrical shape; the cylindrical surface wrapped around a center axis parallel to the predefined direction. The shape and size (dimensions) of the battery cells of a battery cell block may be identical. The cylindrical battery cells of a battery block may be arranged such that each of the battery cells (except for those battery cells at the edge of the battery cell block) are surrounded by six further cylindrically shaped battery cells. These six further battery cells may be arranged in 6-fold symmetry around the battery cell centered in between the six further battery cells. These six further battery cells may each touch the battery cell centered in between the six further battery cells or, alternatively, may each be spaced apart from the battery cell centered in between the six further battery cells.

The Z-shaped busbars comprised in the assembly set according to the invention may be adapted such that, together with a set of suitable battery cell blocks, wherein the number of battery cell blocks corresponds to the number of Z-shaped busbars in the assembly set, the Z-shaped busbars and the battery cell blocks can be assembled such that each Z-shaped busbar is connected, with the positive plate of this Z-shaped busbar, to the positive side of one of the battery cell blocks and is further connected, with the negative side of this Z-shaped busbar, to the negative side of one of the battery cell blocks.

Here and in the following, the expressions "connected" or "connectable" and the like, as far as they refer to a connection between terminals of a battery and a busbar, denote a mechanical and electrical connection or connectability. The mechanical connectability between a terminal of a battery and a plate of the busbar may only denote that the terminal touches the plate of the busbar; a permanent connection between a terminal of a battery and a plate of a busbar may, however, be provided by further fixating elements; see below.

In one embodiment of the assembly set, at least one of the Z-shaped busbars is formed integrally. Preferably, each of the Z-shaped busbars comprised in the assembly set according to the invention are formed integrally. The expression "formed integrally" shall denote in this context that the Z-shaped busbar is formed as one piece. Preferably, at least one of the integrally formed Z-shaped busbars is manufactured by bending a single sheet of metal.

At least one of the Z-shaped busbars may be made of metal. Preferably, each of the Z-shaped busbars is made of metal. The metal may be aluminum, copper, or iron. The metal may be an alloy comprising copper and/or iron. The metal may be an aluminum alloy. Preferably, the metal is a high-strength aluminum alloy. This way, the Z-shaped busbars provide for appropriate structural rigidity required for mechanical stability of the assembled carrier framework.

Preferably, the wall thickness of each of the Z-shaped busbars is at least 1 mm, preferably at least 1.5 mm, and most preferably 1.5 mm.

In a preferred embodiment of the assembly set according to the invention, the connection plate extends between the battery cell blocks of a pair of battery cell blocks, when one battery cell block of the pair of battery cell blocks is connected to the positive plate of the Z-shaped busbar and the other battery cell block of the pair of battery cell blocks is connected to the negative plate of the Z-shaped busbar, such that for each battery cell block of the pair of battery cell blocks, the connection plate completely covers the side of this battery cell block facing the other battery cell block.

The above-described separation of two battery cell blocks connected to a Z-shaped busbar by the connection plate in embodiments of the invention helps to avoid a transgression of a thermal event (e. g., a thermal run-away) from one battery cell block connected to the busbar to the other battery cell block connected to the busbar in case one of these battery cell blocks is affected by a thermal event.

In one embodiment of the assembly set according to the invention, the connection plate of at least one of the Z-shaped busbars, preferably of each of the Z-shaped busbars, may be corrugated. The corrugated connection plate of a Z-shaped busbar may comprise grooves or embayments. The grooves or embayments may extend, along a straight line, from the positive plate to the negative plate of the Z-shaped busbar.

In one embodiment of the assembly set, for at least one of the Z-shaped busbars, a negative lead frame is provided. The negative lead frame is connectable to the side of the negative plate of this Z-shaped busbar being opposite to the side configured for being connected to the negative terminals of the battery cells of a battery cell block. The negative plate of this Z-shaped busbar comprises a plurality of openings positioned at the locations of the negative terminals of the battery cells when the said battery cell block is connected to the negative plate. The negative lead frame is permanently connectable, through the openings in the negative plate, to the negative terminals of the battery cells when the said battery cell block is connected to the negative plate.

Preferably, for each of the Z-shaped busbars in the assembly set according to the invention a negative lead frame is provided; wherein the negative lead frame is connectable to the side of the negative plate of this Z-shaped busbar being opposite to the side configured for being connected to the negative terminals of the battery cells of a battery cell block; wherein the negative plate of this Z-shaped busbar comprises a plurality of openings positioned at the locations of the negative terminals of the battery cells when the said battery cell block is connected to the negative plate; and wherein the negative lead frame is permanently connectable, through the openings in the negative plate, to the negative terminals of the battery cells when the said battery cell block is connected to the negative plate.

The negative lead frame(s) may be permanently connectable, through the openings in the negative plate, to the negative terminals of the battery cells when the said battery cell block is connected to the negative plate, by welding, preferably by laser welding.

The negative lead frame(s) may have a lower wall thickness in comparison to the wall thickness of the Z-shaped busbars. This is advantageous in the afore-mentioned welding process. The wall thickness of the negative lead frames may correspond to the wall thickness of the battery cell cans of the battery cells to be permanently connected to the negative lead frames. The wall thickness of the negative lead frame(s) may be in the range between 0.3 and 0.5 mm. Preferably, the wall thickness of the negative lead frame(s) is 0.4 mm.

In one embodiment of the assembly set, for at least one of the Z-shaped busbars, a positive lead frame is provided; the positive lead frame is connectable to the side of the positive plate of this Z-shaped busbar being opposite to the side configured for being connected to the positive terminals of the battery cells of a battery cell block; wherein the positive plate of this Z-shaped busbar comprises a plurality of openings positioned at the locations of the positive terminals of the battery cells when the said battery cell block is connected to the positive plate; and wherein the positive lead frame is permanently connectable, through the openings in the positive plate, to the positive terminals of the battery cells when the said battery cell block is connected to the positive plate.

Preferably, for each of the Z-shaped busbars in the assembly set according to the invention a positive lead frame is provided; wherein the positive lead frame is connectable to the side of the positive plate of this Z-shaped busbar being opposite to the side configured for being connected to the positive terminals of the battery cells of a battery cell block; wherein the positive plate of this Z-shaped busbar comprises a plurality of openings positioned at the locations of the positive terminals of the battery cells when the said battery cell block is connected to the positive plate; and wherein the positive lead frame is permanently connectable, through the openings in the negative plate, to the positive terminals of the battery cells when the said battery cell block is connected to the positive plate.

The positive lead frame(s) may be permanently connectable, through the openings in the positive plate, to the positive terminals of the battery cells when the said battery cell block is connected to the positive plate, by welding, preferably by laser welding.

The positive lead frame(s) may have a lower wall thickness in comparison to the wall thickness of the Z-shaped busbars. This is advantageous in the afore-mentioned welding process. The wall thickness of the positive lead frames may correspond to the wall thickness of the battery cell cans of the battery cells to be permanently connected to the positive lead frames. The wall thickness of the positive lead frame(s) may be in the range between 0.3 and 0.5 mm. Preferably, the wall thickness of the positive lead frame(s) is 0.4 mm.

In one embodiment of the assembly set, at least one of the positive lead frames comprises a plurality of openings and wherein, for each of the positive lead frames comprising a plurality of openings, the positions of these openings corresponding to the positions of the openings in the respective positive plate of Z-shaped busbar being connectable with that positive lead frame, when the positive lead frame is connected in a suitable way to this positive plate.

In one embodiment of the assembly set, at least one of the negative lead frames comprises a plurality of openings and wherein, for each of the negative lead frames comprising a plurality of openings, the positions of these openings corresponding to the positions of the openings in the respective negative plate of Z-shaped busbar being connectable with that negative lead frame, when the negative lead frame is connected in a suitable way to this negative plate. The openings in the positive lead frame or the negative lead frame may allow a discharge of vent gases (in case of a thermal event such as a thermal runaway), when the assembly set together with a set of battery cell blocks is assembled to a battery cell stack as described below.

In one embodiment of the assembly set, the assembly set, a plurality of first chamfered pins is provided, which protrude from the positive plate of at least one of the Z-shaped busbars to the side of the positive plate configured to be connected to the positive terminals of the battery cells of a battery cell block, wherein the first chamfered pins are positioned such that each of the first chamfered pins penetrates a gap between battery cells, when the battery cell block is connected to the positive plate.

In one embodiment of the assembly set, a plurality of second chamfered pins is provided, which protrude from the negative plate of at least one of the Z-shaped busbars to the side of the negative plate configured to be connected to the negative terminals of the battery cells of a further battery cell block, wherein the second chamfered pins are positioned such that each of the second chamfered pins penetrates a gap between battery cells, when the further battery cell block is connected to the negative plate.

The above-described embodiments having chamfered pins are in particular useful for battery cell blocks comprising cylindrically shaped battery cells. The chamfered pins may act as holders to facilitate the positioning of the battery cells during the process of connecting the battery cell block to the respective positive or negative plate. Also, the chamfered pins impede vent gases from flowing into the gaps between the individual battery cells of a battery cell block.

In one embodiment of the assembly set, for at least one of the Z-shaped busbars, a first pin frame is provided connectable to the positive plate this Z-shaped busbar or, if applicable, to the positive lead frame connectable to the positive plate of this Z-shaped busbar, wherein the first chamfered pins protrude from the first pin frame, and wherein the positive plate of this Z-shaped busbar and, if applicable, the positive lead frame connectable to that Z-shaped busbar, each comprise bore-holes, through which the first chamfered pins of pin frame can be guided, when connecting the first pin frame, in a suitable manner, to the positive plate of that Z-shaped busbar or, if applicable, to the positive lead frame.

In one embodiment of the assembly set, for at least one of the Z-shaped busbars, a second pin frame is provided connectable to the negative plate this Z-shaped busbar or, if applicable, to the negative lead frame connectable to the negative plate of this Z-shaped busbar, wherein the second chamfered pins protrude from the second pin frame, and wherein the negative plate of this Z-shaped busbar and, if applicable, the negative lead frame connectable to that Z-shaped busbar, each comprise bore-holes, through which the second chamfered pins of pin frame can be guided, when connecting the second pin frame, in a suitable manner, to the negative plate of that Z-shaped busbar or, if applicable, to the negative lead frame.

In one embodiment of the assembly set, the first fastening means of each of the Z-shaped busbars comprises a strap, and each of the first fastening elements of the first frame beam comprises a slot configured for engaging with the first fastening means of any one of the Z-shaped busbars.

In one embodiment of the assembly set, the second fastening means of each of the Z-shaped busbars comprises a strap, and each of the second fastening elements of the second frame beam comprises a slot configured for engaging with the second fastening means of any one of the Z-shaped busbars.

In embodiments of the assembly set according to the invention, straps are provided at the connection plate of at least one of the Z-shaped busbars. Additionally or alternatively, straps may be provided at the positive plate of at least one of the Z-shaped busbars. Additionally or alternatively, straps may be provided at the negative plate of at least one of the Z-shaped busbars.

In one embodiment, the assembly set further comprises a plurality of rivets. The first fastening means of each of the Z-shaped busbars comprises at least one bore-hole, and each of the first fastening elements of the first frame beam comprises at least one bore-hole such that each of the first fastening elements is fixable to at least one of the first fastening means by inserting at least one rivet through a bore-hole of the first fastening element and, at the same time, through a bore-hole of the first fastening means. Alternatively or additionally, the second fastening means of each of the Z-shaped busbars comprises at least one bore-hole, and each of the second fastening elements of the second frame beam comprises at least one bore-hole such that each of the second fastening elements is fixable to at least one of the second fastening means by inserting at least one rivet through a bore-hole of the second fastening element and, at the same time, through a bore-hole of the second fastening means.

In one embodiment, the assembly set further comprises: a positive end busbar configured for being connected to the positive terminals of the battery cells of at least one battery cell block; and/or a negative end busbar configured for being connected to the negative terminals of the battery cells of at least one battery cell block.

Instead of the term "positive end busbar," the expression "first end busbar" can be used. Correspondingly, instead of the term "positive end busbar," the expression "first end busbar" can be used. The shape of the positive end busbar may correspond to the shape of a Z-shaped busbar as described before, wherein, however, the negative plate is omitted. Correspondingly, the shape of the negative end busbar may correspond to the shape of a Z-shaped busbar as described before, wherein, however, the positive plate is omitted.

A further aspect of the invention relates to an assembly set for assembling a stack of battery cells, comprising the assembly set for assembling a carrier framework for a stack of battery cell blocks according to the invention, and further comprising: for each of the Z-shaped busbars, a battery cell block being connectable, with the positive terminals of the battery cells of that battery cell block, to the positive plate of this Z-shaped busbar; one further battery cell block being connectable, with the negative terminals of the battery cells of that further battery cell block, to the negative plate of at least one of the Z-shaped busbars; wherein the Z-shaped busbars and the battery cell blocks can be assembled such that each Z-shaped busbar is connected, with the positive plate of this Z-shaped busbar, to the positive terminals of the battery cells of one of the battery cell blocks and is further connected, with the negative plate of this Z-shaped busbar, to the negative terminals of the battery cells of another one of the battery cell blocks.

This is to say, if the number of Z-shaped busbars in the assembly set is N, then N+1 battery cell blocks are required. Of course, the N employed Z-shaped busbars may be shaped identically to each other. Also, the N+1 battery cell blocks may be shaped identically to each other. But note that the above-described assembly set with battery cell blocks also encompasses embodiments, wherein the Z-shaped busbars are *not* identical. Of course, when the assembly set for assembling a stack of battery cells is in an assembled state, the Z-shaped busbars must be isolated from each other. The isolation may be realized, in the simplest case, by a gap between any two adjacent Z-shaped busbars such that these Z-shaped busbars do not contact to each other. Also, insulating materials may be used to establish an isolation between any two adjacent Z-shaped busbars.

Each of the connections between battery terminals and a Z-shaped busbar may be realized by welding. Preferably, laser welding is used for this purpose.

In one embodiment of an assembly set for assembling a stack of battery cells according to the invention comprise one or more battery cell bricks, wherein the number of battery cell bricks corresponds to the number of Z-shaped busbars comprised in the assembly set; and wherein each battery cell brick contains a single one of the Z-shaped busbars being pre-connected, with its positive plate, to the positive terminals of the battery cells of a single one of the battery cell blocks.

Alternative embodiments of an assembly set for assembling a stack of battery cells according to the invention comprise one or more battery cell bricks, wherein the number of battery cell bricks corresponds to the number of Z-shaped busbars comprised in the assembly set; and wherein each battery cell brick contains a single one of the Z-shaped busbars being pre-connected, with its negative plate, to the negative terminals of the battery cells of a single one of the battery cell blocks.

A further aspect of the invention relates to a battery cell stack comprising the assembly set for assembling a stack of battery cells according to the invention, wherein each Z-shaped busbar is connected, with the positive plate of this Z-shaped busbar, to the positive terminals of the battery cells of one of the battery cell blocks and is further connected, with the negative plate of this Z-shaped busbar, to the negative terminals of the battery cells of another one of the battery cell blocks; and wherein the first frame beam is connected to each of the Z-shaped busbars, and wherein the second frame beam is connected to each of the Z-shaped busbars. A further aspect of the invention relates to a vehicle comprising the battery cell stack according to invention.

A further aspect of the invention relates to a method for assembling a battery cell stack, the method comprising the following steps: a) providing a multiplicity of battery cell bricks, each battery cell brick comprising a Z-shaped busbar having a positive plate, a negative plate, and a connection plate, each battery cell brick further comprising a battery cell block, wherein the positive terminals of the battery cells of that battery block are connected to the positive plate of one of the Z-shaped busbar, and wherein each of the Z-busbars is fixable to a first frame beam and a second frame beam; b) providing one further battery cell block; c) providing the first frame beam and the second frame beam, the first and the second frame beam each being configured for being fixed to each of the Z-shaped busbars; d) connecting a first one of the battery cell bricks by connecting the negative plate of the Z-shaped busbar of the first one of the battery cell bricks to the negative terminals of the battery cells of the further battery cell block provided in step b); e) connecting a further one of the battery cell bricks by connecting the negative plate of the Z-shaped busbar of that further one of the battery cell bricks to the negative terminals of the battery cells of the battery cell block of the battery cell brick that has been connected in the previous step; f) repeating step e) until each of the battery cell bricks is connected; and g) fixing the first frame beam to each of the Z-shaped busbars and fixing the second frame beam to each of the Z-shaped busbars. In steps d) and e), the first one and the further one of the battery cell bricks are connected such to the Z-shaped busbar that the first one and the further one of the battery cell bricks are separated by the connection plate of the Z-shaped busbar.

Above-described aspects of the invention, or embodiments thereof, provide at least the following advantages:
- Use of only a simple sheet-metal to realize the busbars, the sheet-metal combining the structural function as well the electrical connection.
- Rigid Z-shape of the busbars, which can be used as a self-supporting cell-carrier.
- Improved safety design, the vertical wall of the "Z" separates all parallel cell-bricks from each other, thus providing a prevention of propagation in case of an venting event.
- Uniform battery cell orientation.
- Weldability, single cell bricks can be pre-bonded / pre-assembled.
- Easy handling and better process capability due to smaller pre-assembly units (tolerance stack-up).
- Improved cooling performance, if the invention is used together with a cooling system.
- Modular application: length of the battery cell stack can be adjusted easily.
- Good cell-to-Package ratio with a higher functional and safety integration, being achieved with a smaller number of parts (i. e., lower costs), which facilitates the assembly as well.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: is a schematic perspective view illustrating a "cell brick" that can be assembled with parts of an assembly set according to an exemplary embodiment of the invention;
- Fig. 2: is an exploded view of parts of the cell brick illustrated in Fig. 1;
- Fig. 3: shows schematically a region of a positive plate in the assembled assembly set as described before with reference to Figs. 1 and 2;
- Fig. 4: schematically illustrates the process of assembling a stack of battery cell blocks according to an embodiment of the invention;
- Fig. 5: schematically illustrates the path of the electric current in a battery cell stack according to an embodiment of the invention;
- Fig. 6: schematically illustrates the assembly of an embodiment of a battery cell stack according to the invention;
- Fig. 7A: illustrates an embodiment of a battery cell stack according to the invention;
- Fig. 7B: illustrates schematically a part (3-dimensional cut-out) of a frame beam usable in embodiments of the battery cell stack according to the invention; and
- Fig. 8: schematically illustrates the manufacture of an alternative embodiment of a battery cell stack according to the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

In the drawings, the relative sizes of elements, layers, and regions may be exaggerated for clarity.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The general concept underlying the present invention is based on a busbar design which is shaped like a "Z". The busbar may be made, for example, of aluminum or copper. Reason for this Z-like shape is mainly driven by the request to have a uniform top-down orientation of the battery cells (in particular when cylindrically shaped cells are used) in order to improve, at least in embodiments of the invention, the safety performance during a thermal runaway event, and to facilitate the assembly, in particular in view of the electrical connection of the cells. Specifically, with the uniform orientation of the battery cells in a battery cell stack according to the invention, it is possible to locate a cooling system in the opposite position of the venting openings of the cells, which would preferably be on the top side of the cell stack. Additionally, with the Z-shape, the cooling behavior is improved due to the circumstance that heat-flow through the vertical wall of the Z-shaped busbar, from the PLUS-Terminal (at the bottom side in preferred embodiments) of the cell to the cooling plate (at the top side in preferred embodiments) is improved greatly. Another advantage is that the vertical wall physically separates each serial-connected "cell brick" (denoting essentially a bundle of cells, which are connected in parallel on one Z-shaped busbar; see below); hence, also a thermal propagation between the individual cell bricks in case of a venting event can be prevented.

Finally, the shape itself is very rigid. As a result, additional supporting parts are obsolete, which makes the Z-shaped busbar a part of the battery structure.

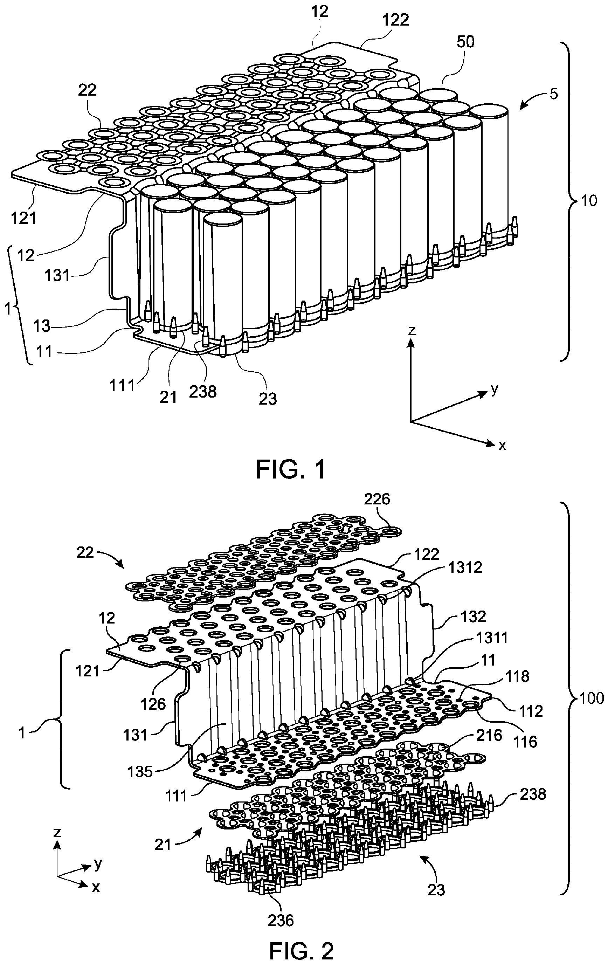

Figure 1 is a perspective view illustrating a "cell brick" 10 that can be assembled with parts of an assembly set according to an exemplary embodiment of the invention together with a suitable block of battery cells 5 (in the following shortly referred to as "battery cell block").

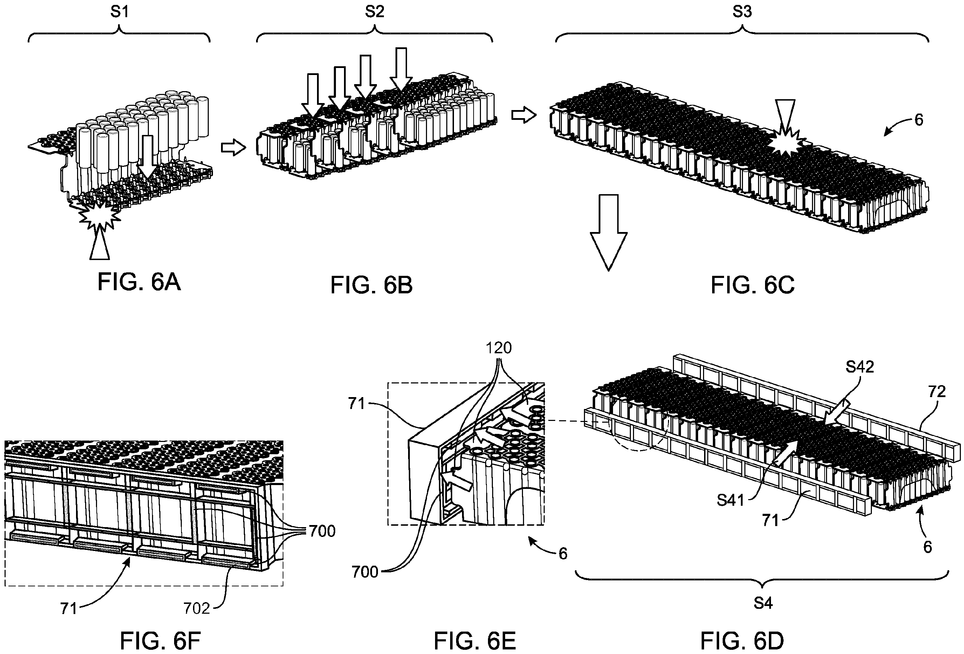

Figure 2 is an exploded view of the cell brick 10 illustrated in Fig. 1, however, without the battery cell block 5. To facilitate the description, a Cartesian coordinate system with axes x, y, and z is also depicted in Figs. 1 and 2. A battery cell stack according to an embodiment of the invention, i. e., an assembly set for assembling a carrier framework for a stack of battery cell blocks, which is completely assembled in the intended way together with a predefined number of battery cell blocks, will be described below with reference to Figures 6-8.

Shown in Fig. 1 is the battery cell block 5 comprising 42 identically shaped battery cells 50. Each of the battery cells 50 has a cylindrical shape and extents, in the figure, along the z-direction of the depicted coordinate system. In the battery cell block 5, the battery cells 50 are packed together as close as possible, i. e., except for the battery cells 50 at the edge of battery cell block 5, each of the battery cells 50 is surrounded by six further battery cells 50 according to a 6-fold symmetry. Further, all battery cells 50 of the battery cell block 5 are orientated such that their positive terminals (PLUS-terminals) are positioned at their respective bottom ends in figure. Accordingly, the negative terminal (MINUS-terminal) of each of the battery cells 50 of battery cell block 5 is located at the upper end of the respective battery cell 50.

As shown in Figs. 1 and 2, the illustrated cell brick 10 comprises a busbar 1 being shaped in a Z-like manner, or more precisely, a busbar 1, which exhibits a profile or cross-section being approximately shaped like a Z. In Figs. 1 and 2, this profile or cross-section extends along a plane parallel to the x-z-plane of the depicted coordinate system. Busbar 1 comprises three parts each having a planar shape: A first part, referred to as first plate or positive plate 11 in the following, extents, in the figures, parallel to the x-y-plane of the coordinate system and is sized such that it covers a cross-section (along the x-y-plane of the coordinate system) of the battery cell block 5. More specifically, positive plate 11 is formed such that it may mechanically and electrically get connected to each of the positive terminals of the battery cells 50 of battery cell block 5. In other words, busbar 1 and battery cell block 5 may be assembled such that each of the battery cells 50 abuts against an upper side of positive plate 11 as shown in Fig. 1.

A second part of busbar 1, referred to as second plate or negative plate 12 in the following, extents, in the figures, likewise parallel to the x-y-plane of the coordinate system and is, similar to the positive plate 11, sized such that it covers a cross-section (along the x-y-plane of the coordinate system) of a further battery cell block (not shown), which is shaped and orientated identical to the battery cell block 5. More specifically, the negative plate 12 is formed such that it may mechanically and electrically become connected to each of the negative terminals of the battery cells of said further battery cell block. In other words, busbar 1 and the further battery cell block (not shown) may be assembled such that each of the battery cells of the further battery cell block abuts against a lower side of negative plate 12, when the negative plate 12 is orientated as shown in Fig. 1.

Both, positive plate 11 and negative plate 12 may exhibit an approximately rectangular shape (except, possibly, for fastening means and/or a plurality of openings in the respective plate; see below). At least along the x-direction, the dimension of the positive plate 11 as well as of the negative plate 12 should not or only very little exceed the respective dimension of battery cell block 5, when the busbar 1 and battery cell block 5 are arranged as depicted in Fig. 1. The reason therefore is to keep the dimensions of the complete battery cell stack assembled of several cell bricks 10 as shown in Fig. 1 as small as possible. More specifically, when sticking or plugging a multiplicity of cell bricks as shown in Fig. 1 to one another along the x-direction as described in more detail below with reference to Figures 6-8, any two adjacent battery cell blocks shall be spatially as close together as possible.

Eventually, the third part of busbar 1, referred to as connection plate 13 in the following, extents, in the figures, parallel to the y-z-plane of the depicted coordinate system. It has an approximately rectangular shape (except, possibly, for fastening means and/or a plurality of openings in the respective plate; see below) and is sized such that its breadth (i. e., it's extension along the y-direction) corresponds essentially to the respective breadths of the positive plate 11 and the negative plate 12, and that its height (i. e., its extension along the y-direction) corresponds essentially to the height of the battery cell block 5, i. e., the length of each of the battery cells 50.

As shown in Fig. 2, the connection plate 13 may not be perfectly planar but may be corrugated, i. e., the connection plate 13 may comprise grooves or embayments 135. These grooves or embayments 135 are each configured to receive a part of the cylindrically shaped surface of the battery cells 50 that abut against the face of the connection plate 13 visible in Fig. 2, when the battery cell block 5 is assembled with the busbar 1 as illustrated in Fig. 1. Thus, the grooves or embayments 135 may only be small. The surface of connection plate 13, which is not visible in Fig. 2 (i. e., the surface of connection plate 13 opposite to its surface visible in Fig. 2), may comprise corresponding groups or embayments. For example, the profile or cross-section of connection plate 13 may exhibit an approximately sinusoidal shape when viewed in the x-y-plane. The afore-described geometry of the connection plate 13 may foster the compactness (i. e., dimensions as small as possible) of the assembled stack of battery cell blocks (in the x-direction) comprising a multiplicity of cell bricks 10 as shown in Figs. 1 and 2.

As busbar 1 is provided for conducting electric currents, which must be made of an electrically conductive material. However, in the assembled stack of battery cell blocks, the (plurality of) busbars 1 must not only provide for an electric connection, but also for appropriate structural rigidity of the stack of battery cell blocks. Thus, busbar 1 may be made of metal. For example, busbar 1 may be made of copper or iron. Preferably, busbar 1 is made of a high-strength aluminum alloy (Al-alloy). The thickness of busbar 1 (i. e., the wall thickness of each of positive plate 11, negative plate 12, and connection plate 13) may be in the range of 1 mm to 2 mm. In embodiments, the thickness may be smaller or greater, depending on the demands as to structural stability required for a specific stack of battery cell blocks. Preferably, the thickness is 1.5 mm.

The three parts of busbar 1, viz. the positive plate 11, the negative plate 12, and the connection plate 13, may be originally separated parts, which are welded together to form busbar 1. Preferably, however, busbar 1 is formed integrally, i. e., it is made from one piece. For example, busbar 1 may be made from one elongated sheet of metal, the ends of which being bent or angled in opposite directions with respect to the middle part of the sheet of metal. In embodiments, wherein the busbar 1 is formed integrally from the bent sheet of metal, a plurality of openings 1311, 1312 may have been inserted before into the sheet of metal along the lines, at which the sheet of metal is bent during the manufacture process of the busbar 1.

Preferably, busbar 1 is shaped such that the plane, in which positive plate 11 extents, is parallel to the plane, in which negative plate 12 extents. Preferably, connection plate 13 extends in a plane perpendicular to the planes, in which the positive plate 11 and the negative plate 12, respectively, extent. In other words, the positive plate 11 is orientated perpendicular to the connection plate 13, the negative plate 12 is likewise orientated perpendicular to the connection plate 13, the connection plate 13 extends between the positive plate 11 and the negative plate 12, and the positive plate 11 and the negative plate 12 protrude in opposite directions from the connection plate 13. The reason for the afore-described geometry of busbar 1 is to improve the compactness of the assembled stack of battery cell blocks, provided that the battery cell blocks each have a shape wherein the cylindrical battery cells each extend perpendicular to the plane, in which the positive terminals of the battery cells are arranged, and also perpendicular to the plane, in which the negative terminals of the battery cells are arranged. Although in the afore-described geometry of the busbar 1, its profile or cross-section taken parallel to the x-z-plane of the depicted coordinate system does not perfectly resemble the letter Z (as the middle line of the letter Z reaches the lower bar and the upper bar of the letter Z in angles unequal to 90°), the term "Z-shaped" will nevertheless be used throughout this description and the claims such that it also encompasses the afore-described preferred geometry of the busbar 1 for the sake of simplicity.

In embodiments, openings 116 are formed within the positive plate 11 of the Z-shaped busbar 1. Alternatively or additionally, openings 126 may be formed within the negative plate 12. These openings 116, 126 may facilitate the connection (i. e., the electric and/or mechanical connection) of the respective terminals of the battery cells of the battery blocks to the plates.

While the electric connection between the positive terminals of the battery cells 50 the battery cell block 5 and positive plate 11 can be established by mere tangency, the mechanical connection between these members may be more difficult to realize. The same holds for the electric and mechanical connection between the negative terminals of battery cells of a battery cell block and the negative plate 12 a busbar 1. For example, in embodiments, where the respective mechanical connections between the battery cell terminals and the respective plates 11, 12 of the busbar 1 are established by welding (e. g., laser welding), it may occur the situation that the battery cell terminals cannot be directly welded to the respective plate 11, 12 of the busbar 1 due to the different thicknesses of the plates 11, 12 and the battery cell cans (battery cell housings), because the energy required to weld of the plates 11, 12 of the busbar 1 must be such intense that it would destroy the can of the battery cells 50.

Thus, in embodiments, a busbar assembly 100 instead of the mere busbar 1 is employed, wherein the busbar assembly 100 further comprises a first lead frame or positive lead frame 21 and/or a second lead frame or negative lead frame 22.

In embodiments of the assembly set according to the invention, which employ a busbar assembly 100 having a negative lead frame 22, the negative plate 12 of the Z-shaped busbar 1 comprises openings 126 as already described above. While, with regard to Figs. 1 and 2, the negative plate 12 is configured such that a battery cell block (not shown) is connectable from below to the negative plate 12 (the battery cell block orientated such that the negative terminals of its battery cells being arranged at its upper side), the negative plate 12 is further configured for being connected with its upper surface to the negative lead frame 22. Then, the negative lead frame 22 can be connected, through the openings 126 of the negative plate 12, to the negative terminals of the battery cells of the battery cell block, which is to be connected to the negative plate 12.

Preferably, this connection between the negative plate 12 and the negative terminals of the battery cells of the battery block to be connected to the negative plate 12 is performed by welding, e. g., by laser welding. Then, the negative lead frame 22 must be made of a weldable material. Preferably, the negative lead frame 22 is made of metal. The negative lead frame 22 may be made of the same material as Z-shaped busbar 1 (see above). Specifically, the material of the negative lead frame 22 may be copper, iron, or aluminum, or an alloy comprising at least one of these materials. In embodiments, the alloy material may also be chosen according to the needs of a laser welding process. It is desirable that the cans of the battery cells and the negative lead frame 22 have approximately the same wall thickness, as this facilitates the process of welding. For example, the thickness of the negative lead frame 22 may be in the range between 0.3 to 0.5 mm. Preferably, the thickness of the negative lead frame is 0.4 mm.

In embodiments, the negative lead frame 22 comprises openings 226. The number of openings 226 comprised in negative lead frame 22 may be equal to the number of openings 126 comprised in negative plate 12. Then, the positions of the openings 226 within negative lead frame 22 may correspond, with reference to a plane parallel to the x-y-plane of the coordinate system, to the positions of the openings 126 of negative plate 12, when the negative lead frame 22 is connected with the upper side of negative plate 12 as depicted in Fig. 1. The openings 226 in negative lead frame 22 may facilitate the welding process and/or may also provide for a possibility for vent gas drainage. Also, the cut-out geometry may weaken the negative lead frame 22 in order to compensate for tolerance compensation as to the dimensions of the Z-shaped busbar 1.

Alternatively or additionally to the negative lead frame 22, a positive lead frame 21 is employed in embodiments of the assembly set according to the invention. In those embodiments, the positive plate 11 of the Z-shaped busbar 1 comprises openings 116 as already described above. While, with regard to Figs. 1 and 2, the positive plate 11 is configured such that the battery cell block 5 is connectable from above to the positive plate 11 (the battery cell block 5 orientated such that the positive terminals of its battery cells 50 being arranged at its lower side), the positive plate 11 is further configured for being connected with its lower surface to the positive lead frame 21. Then, the positive lead frame 21 can be connected, through the openings 116 of the positive plate 11, to the positive terminals of the battery cells 50 of the battery cell block 5, which is to be connected to the positive plate 11.

Preferably, the afore-described connection between the positive plate 11 and the positive terminals of the battery cells 50 of the battery block 5 to be connected to the positive plate 11 is performed by welding, e. g., by laser welding. Then, the positive lead frame 21 must be made of a weldable material. Preferably, the positive lead frame 21 is made of metal. The positive lead frame 21 may be made of the same material as Z-shaped busbar 1 (see above). Specifically, the material of the positive lead frame 21 may be copper, iron, or aluminum, or an alloy comprising at least one of these materials. In embodiments, the alloy material may also be chosen according to the needs of a laser welding process. It is desirable that the cans of the battery cells 50 and the positive lead frame 21 have approximately the same wall thickness, as this facilitates the process of welding. For example, the thickness of the positive lead frame 21 may be in the range between 0.3 to 0.5 mm. Preferably, the thickness of the positive lead frame is 0.4 mm.

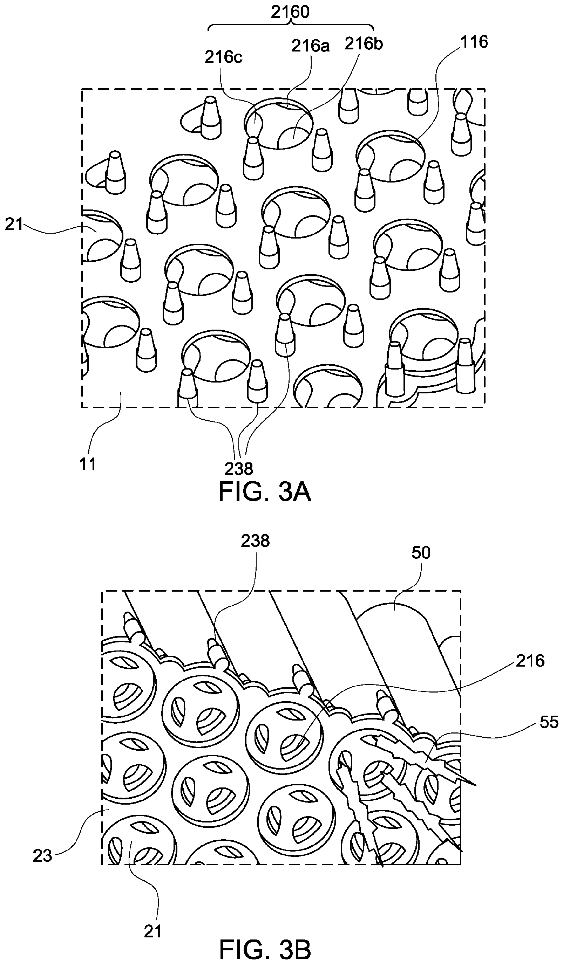

In embodiments, the positive lead frame 21 comprises openings 216. These openings 216 may be grouped so that a predefined multiplicity of openings (e. g., three openings) may together form a group of openings 2160 (opening group); this will be described in more detail below with reference to Fig. 3. The number of opening groups comprised in positive lead frame 21 may be equal to the number of openings 126 comprised in positive plate 11. Then, the positions of the opening groups within positive lead frame 21 may correspond, with reference to a plane parallel to the x-y-plane of the coordinate system, to the positions of the openings 116 of positive plate 11, when the positive lead frame 21 is connected with the lower side of positive plate 11 as indicated in Fig. 2. The openings 216 in positive lead frame 21 may facilitate the welding process and/or may also provide for a possibility for vent gas drainage (see below as to Fig. 3). Also, the cut-out geometry may weaken the positive lead frame 21 in order to compensate for tolerance compensation as to the dimensions of the Z-shaped busbar 1.

In preferred embodiments, the busbar assembly 100 comprises both, the negative lead frame 22 and the positive lead frame 21.

In addition to the one or two lead frames as described in the foregoing, chamfered pins 238 can be employed in the busbar assembly 100. The chamfered pins 238 may improve the positioning of the single battery cells 50, when the battery cell block 5 becomes connected to the positive plate 11 as shown in Figs. 1 and 2. However, the chamfered pins 238 may also take over an important role for guiding vent gases in case of thermal events (e. g., thermal run-away); this will be described below in more detail with reference to Fig. 3.

In the busbar assembly 100 illustrated in Figs. 1 and 2, the chamfered pins 238 are provided at the positive plate 11 of Z-shaped busbar 1. To facilitate the assembly, the chamfered pins 238 protrude from one side of a pin frame 23. Pin frame 23 is configured to be attached - directly or indirectly - from below, with reference to the figures, to positive plate 11. In the illustrated example, pin frame 23 is attached only indirectly to positive plate 11, as positive leads frame 21 is sandwiched between the positive plate 11 and the pin frame 23 during the illustrated assembly process. Positive plate 11 comprises a plurality of further openings 118 such that each of the chamfered pins 238 can be led through one of the further openings 118 during the process of attaching pin frame 23 from below to the positive plate 11. As a result, the tips of the chamfered pins 238 protrude from the upper side of positive plate 11 into the space intendants for receiving the battery cell block 5. Consequently, when battery cell block 5 is connected to the positive plate 11 as illustrated in Figs. 1 and 2, battery cell block 5 can only be positioned such on the upper side of positive plate 11 that the tips of chamfered pins 238 engage into the gaps between the cylindrical battery cells 50 of battery cell block 5. Due to the arrangement of the battery cells 50 within the battery cell block 5 (see above), each of the inner battery cells 50 of battery cell block 5 is surrounded by six gaps. Accordingly, the chamfered pins 238 are arranged in a 6-fold rotational symmetry around each of the inner ones of openings 116 (i. e., not the openings 116 being closest to an edge of positive plate 11) in the embodiment of the busbar assembly 100 illustrated in Figs. 1 and 2.

The material of the pin frame 23 may be copper, iron, or aluminum, or an alloy comprising at least one of these materials. Preferably, the material of pin frame 23 is the same material as used for the manufacture of positive lead frame 21, which is sandwiched between pin frame 23 and positive plate 11. However, pin frame 23 may also be made from plastics. Pin frame 23 may be attached by welding, e. g., laser welding, to the lower side of positive lead frame 21. Alternatively or additionally, pin frame 23 may be connected to the busbar assembly 100 via a plug connection between the chamfered pins 238 and the respective further openings 118 provided in the positive lead frame 21.

Further, openings 236 may be provided in pin frame 23. When pin frame 23 is attached from below to positive plate 11 (thereby sandwiching, in embodiments, the positive lead frame 21 as indicated in Fig. 2), the positions of the openings 236 of pin frame 23 correspond, with reference to a plane parallel to the x-y-plane of the coordinate system, to the positions of the openings 116 of the positive plate 11.

As all the parts illustrated in Fig. 2 (i. e., Z-shaped busbar 1, positively lead frame 21, negative lead frame 22, and pin frame 23) can be easily welded together (preferably by laser welding), the busbar assembly 100 comprising the afore-mentioned parts can be manufactured and delivered in a pre-assembled condition. Likewise, the whole cell brick 10 as illustrated in Fig. 1 and comprising the parts shown in Fig. 2 together with one battery cell block 5 can be manufactured and delivered in a pre-assemblage condition.

However, depending on the skills of the supplier, it could be also feasible to thin out the cellinterface area in order to ensure appropriate laser welding process capability. In such cases, there is no special need for the lead-frame parts such as the positive lead frame 21 and/or the negative lead frame 22 as described above. Accordingly, in embodiments of the assembly set according to the invention, the lead frames can be omitted.

In embodiments, the Z-shaped busbar 1 further comprises tabs or straps, which facilitate a fastening or fixing of the Z-shaped busbar 1 or the complete busbar assembly 100 to frame beams, as will described below with reference to Figs. 6 to 8. Specifically, the positive plate 11 may comprise a first positive plate strap 111 and a second positive plate strap 112, the negative plates 12 may comprise a first negative plate strap 121 and a second negative plates strap 122, and the connection plate 13 may comprise first connection plate strap 131 and a second connection plate strap 132.

Figure 3A shows schematically a region of the positive plate 11 in the assembled busbar assembly 100 as described before with reference to Figs. 1 and 2. As visible through the openings 116 of the positive plate 11, the positive lead frame 21 has been attached from below to positive plate 11. Not visible in Fig. 3A but indicated in Fig. 2 is pin frame 23, which is attached, in turn, from below to positive lead frame 21 such that the latter is sandwiched between pin frame 23 and positive plate 11. As can be taken from Fig. 2 and the respective description above, the openings 216 in the positive lead frame 21 are located directly below each of the openings 116. Also, openings 236 of pin frame 23 are located below each of the openings 116 of positive plate 11. Thus, the arrangement of the openings would enable a gas flow through the positive plate 11, the positive lead frame 21, and pin frame 23 through the openings 116 of the positive plate 11, the openings 216 of the positive lead frame 21, and the openings 236 of the pin frame 23.

Under each of the openings 116 of positive plate 11 (and, even if not visible in Fig. 3A, above each of the openings 236 of pin frame 23) are grouped three openings 216a, 216b, 216c of the positive lead frame 21. Any three of those grouped openings 216a, 216b, 216c together form an opening group 2160. The piece of material of positive lead frame 21 separating the openings 216a, 216b, 216c from each other is thus provided, in the assembled busbar assembly 100, below the opening 116 of the positive plate 11, this piece of material (having a star-like shape comprising three bars; see Fig. 3B) can thus be welded to the positive terminal of the battery cell 50, which becomes connectors from above to the upper side of positive plate 11, when the busbar assembly 100 is assembled.

The 6-fold rotational symmetry, in which the chamfered pins 238 are arranged around any one of the openings 116 (except for openings 116 positioned at the edges of positive plate 11), which has already been described above in the context of Fig. 2, is again clearly visible in Fig. 3A. A first functional aspect of the chamfered pins 238 is to facilitate the alignment of the battery cells 50, when the battery cell block 5 is connected to the upper side of positive plate 11 as described before with reference to Figs. 1 and 2. A second functional aspect, which is independence from the first functional aspect, will be described in the following with respect to Fig. 3B

Figure 3B shows schematically a region of the pin frame 23 in the assembled busbar assembly 100, which has also been connected to the positive terminals of battery cells 50 of battery cell block 5 as described before with reference to Figs. 1 and 2. If a thermal event such as a thermal run-away occurs in one or more of the battery cells 50 of battery cell block 5, hot vent gas 55 (symbolized in the figure by a flame-symbol) may escape with high pressure out of the positive terminals of the affected battery cells 50. The afore-described geometry of busbar assembly 100 (and in particular the positioning of the openings provided in positive plate 11, positive lead frame 21, and pin frame 23) allows then for an efficient discharge of the vent gas from the affected battery cells 50 and the battery cell block 5.

However, the individual battery cells 50 are not rotationally aligned. It is therefore possible that the degassing openings of the battery cells 50 are covered by the bars of positive lead frame 21 separating the openings 216a, 216b, 216c of the opening group 2160 in the positive lead frame 21 from each other (see the above description as to Fig. 3A). Since the battery cells 50 are not sealed against the Z-shaped busbar 1, the vent gas flow could now be diverted upwards (i. e., in the positive z-direction with respect to the coordinate system of Figs. 1 and 2) between the battery cells 50. The chamfered pins 238 of the pin frame 23, however, prevent the vent gas from flowing into the gaps between the battery cells 50. This is the second functional aspect of the chamfered pins 238 provided in embodiments of the busbar assembly 100 that may be used in embodiments of the assembly set according to the invention.

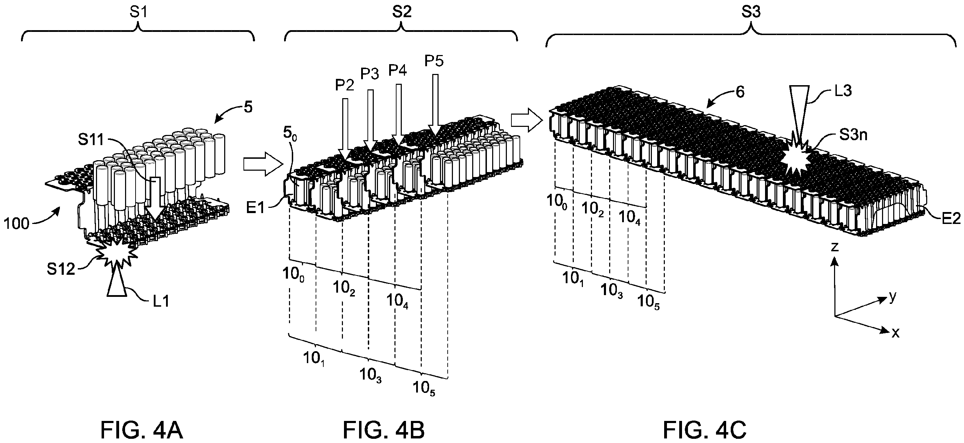

Figure 4 schematically illustrates the process of assembling a stack 6 of battery cell blocks using the plurality of busbar assemblies 100 as shown in Fig. 2 together with a plurality of battery cells blocks 5 as depicted in Fig. 1. The coordinate system depicted in Fig. 4 applies to each of Figs. 4A, 4B, and 4C. It indicates the orientation of busbar assemblies 100 the battery cell blocks 5 in the same way as done in Figs. 1 and 2. In one embodiment of the manufacture process, a first step S1 of the manufacture process comprises the assembly of a "battery cell brick" 10 (in the following simply referred to as "cell brick" 10). It is assumed that busbar assembly 100 is already (pre-)assembled. Then, a first step S1 (illustrated in Fig. 4A) comprises the connection of a battery cell block 5 to the positive plate 11 (see Fig. 2) of a busbar assembly 100. Specifically, battery cell block 5 comprises a bundle of battery cells (in the illustration, it is a bundle of 42 battery cells), wherein each of the battery cells is orientated such that its positive terminal is arranged at its bottom end, and negative terminal is arranged at its top end. Then, in a first sub-step S11 of the first step S1, battery cell block 5 is positioned onto the upper side of the positive plate 11 of Z-shaped busbar 1 (see Fig. 2) of busbar assembly 100. This is indicated by the arrow orientated to the bottom in Fig. 4A. Next, in a second sub-step S12 of the first step S1, the positive terminals of the battery cells of battery cell block 5 are each welded to the positive plate 11 of Z-shaped busbar 1. The welding process is symbolized in Fig. 4A by a flame. Preferably, laser welding is used for the welding process. The laser is indicated in Fig. 4A by laser beam L1. The laser beam L1 is directed from below to the assembly (with regard to the figure) and then causes a welding connection between the material of the positive lead frame 21 (see Fig. 2) and the positive terminals of the battery cells of battery cell block 5 through the openings 116 provided in positive plate 11 (see Fig. 2). The result of manufacture step S1 is an assembled cell brick 10 as depicted in Fig. 1.

For the following second step S2 (sketched in Fig. 4B) of the manufacture process illustrated in Fig. 4, a predefined number of cell bricks 10 must be provided. Note that only five cell bricks 10₁, 10₂, 10₃, 10₄, 10₅ are shown in Fig. 4B, while the predefined number of cell bricks may be different and is typically greater than five (for example, the number of cell bricks according to Figs. 1 and 4A in the assembled stack 6 of battery cells blocks shown in Fig. 4C amounts to 15). First, a starting battery cell block 5₀ to begin with must be provided. The starting battery cell block 5₀ is not comprised in a cell brick according to Fig. 1. Preferably, the starting battery cell block 5₀ is equipped with a first end busbar or positive end busbar E1, which may serve as the positive terminal of the complete stack 6 of battery cell blocks shown in Fig. 4C. The positive end busbar E1 is therefore (at least electrically) connected to the positive terminals of the battery cells of the first battery cell block (viewed along the x-direction) comprised in the stack 6 of battery cells blocks depicted in Fig. 4C. The starting battery cell block 5₀ together with the positive end busbar E1 may be provided together in a pre-assembled condition as an initial cell brick 10₀. Then, the negative terminals of the battery cells comprised in the starting battery cell block 5₀ are (detachably) connected with the bottom side of negative plate of the Z-shaped busbar (see Figs. 1 and 2) comprised in a first cell brick 10₁. Subsequently, the negative terminals of the battery cells comprised in the first cell brick 10, are (detachably) connected with the bottom side of negative plate of the Z-shaped busbar (see Figs. 1 and 2) comprised in a second cell brick 10z. This procedure is indicated by the arrow P2 in Fig. 4B. The process is then repeated for the remaining cell bricks (as sketched in Fig. 4B for the further cell bricks 10₃, 10₄, and 10₅ and indicated by the arrows P3, P4, and P5) until each of the cell bricks are positioned as illustrated in Fig. 4C.

After performing step S2, each of the cell bricks is indeed arranged in the correct position to form the assembled stack of battery cells blocks (see Fig. 4C) and already loosely connected to an adjacent cell brick, but the individual cell bricks (and the starting battery cell block 5₀) are not yet connected to each other in a permanent manner. To achieve a permanent connection between the cell bricks (including the initial cell brick 10₀) in the stack 6 of battery cell blocks, a third step S3 of the manufacture process is performed, which is sketched in Fig. 4C.

If a number of N cell bricks is to be assembled to the stack 6 of battery cell blocks (wherein the initial cell brick 10₀ is not counted), N permanent connections must be established, each of these connections to be established between one of the battery cell blocks and the negative plate of a Z-shaped busbar. To that end, N sub-steps are performed. In each of these sub-steps, the negative terminals of the battery cells comprised in a battery cell blocks of an individual cell brick become permanently connected to the negative plate of a Z-shaped busbar comprised in an adjacent cell brick. These permanent connections may be established by welding, preferably by laser welding. One of these sub-steps is indicated in Fig. 4C as sub-step S3n. In sub-step S3n, a laser beam L3 is directed from above onto the negative lead frame (see Figs. 1 and 2) comprised in a busbar assembly as depicted in Figs. 1 and 2, which is in turn comprised in one of the cell bricks comprised in the stack 6 of the battery cell blocks. Thus, the material of the negative lead frame 22 is then welded to the negative terminals of the battery cells of the battery cell block positioned below this negative lead frame 22 through the openings 126 of the negative plate 12. The welding process of sub-step S3n is symbolized in Fig. 4C by the symbol of a flame and the laser is indicated by laser beam L3.

Also visible in the stack 6 of the battery cell blocks illustrated in Fig. 4C is a second end busbar or negative end busbar E2, which may serve as the negative terminal of the complete stack 6 of battery cell blocks. The negative end busbar E2 is therefore (at least electrically) connected to the negative terminals of the battery cells of the last battery cell block (viewed along the x-direction) comprised in the stack 6 of battery cells blocks.

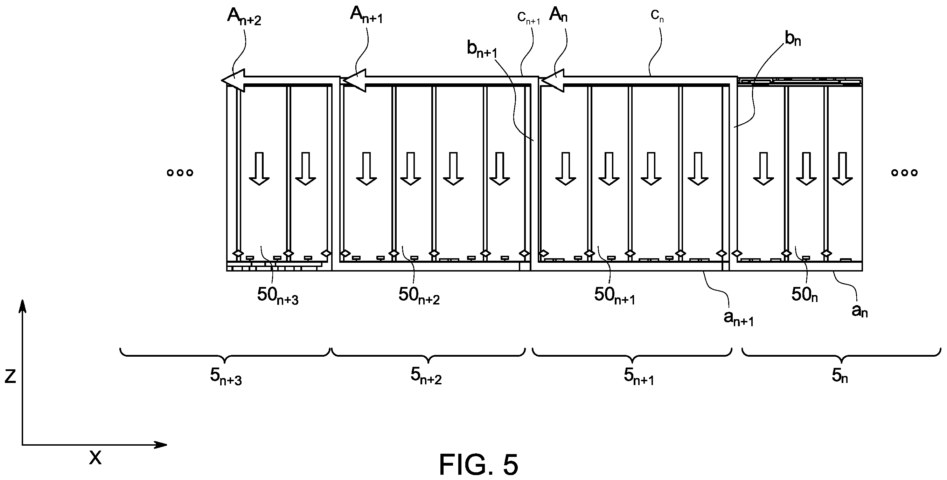

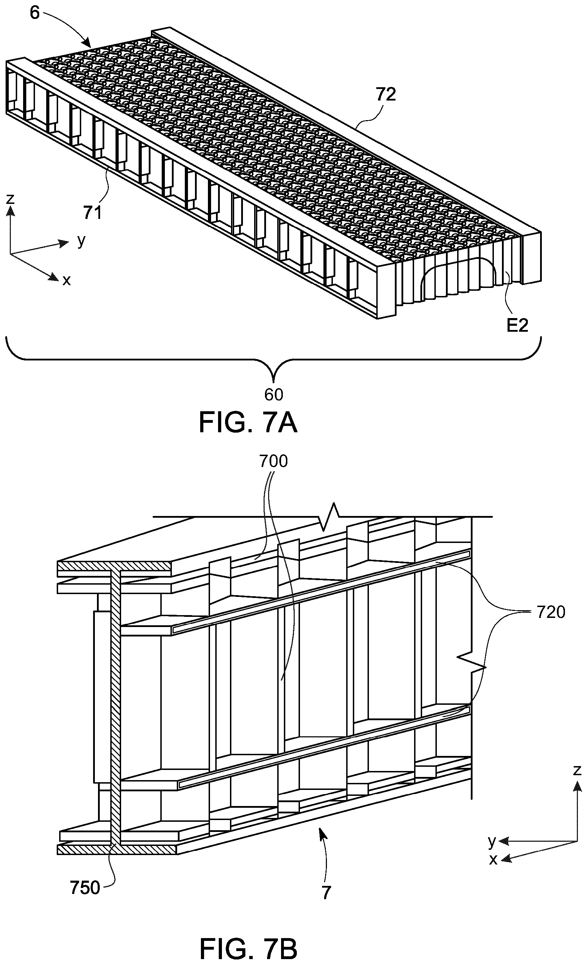

Figure 5 schematically illustrates the path of the electric current and the direction of the current flow ("technical current flow direction") in a battery cell stack according to embodiments of the invention, i. e., a battery cell stack comprising the assembly set according for assembling a carrier framework for a stack of battery cell blocks according to an embodiment of the invention. Shown are four battery cell blocks 5ₙ, 5ₙ₊₁, 5ₙ₊₂, 5ₙ₊₃ arranged against a direction x of a two-dimensional coordinate system depicted in figure, the axes x and z of this coordinate system being consistent with the axes x and z of the coordinate system shown in Fig. 4. The battery cell blocks 5ₙ, 5ₙ₊₁, 5ₙ₊₂, 5ₙ₊₃ shown in Fig. 5 may be any four adjacent battery cell blocks comprised in the stack of battery cell blocks as depicted in Fig. 4C. Each of the battery cell blocks 5ₙ, 5ₙ₊₁, 5ₙ₊₂, 5ₙ₊₃ comprises four battery cells, the first battery cell block 5ₙ and last battery cell block 5ₙ₊₃ (viewed against the direction x), however, are shown only incompletely. Each of the battery cells in each of the battery cell blocks is orientated such that its positive terminal is located at the lower end of the battery cell and its negative terminal is located at the upper end of the battery cell. Each battery cell block amplifies the voltage between the end terminals of the stack of battery cell blocks, these end terminals may be realized by first and second end busbars E1, E2 as shown in Figs. 4 and 7A. Although the electrochemical procedures in a battery cell are much more complex than a simple current flow, a battery cell can be viewed as a black box, through which electric current flows as indicated by the arrows (orientated from top to bottom) depicted in each of the shown battery cells.

The four battery cell blocks 5ₙ, 5ₙ₊₁, 5ₙ₊₂, 5ₙ₊₃ are connected in series via three Z-shaped busbars or busbar assemblies (not shown) as described before in the context of Figs. 1 and 2. The profiles or cross-sections of these Z-shaped busbars or busbar assemblies correspond to the shape of the Z-shaped arrows Aₙ, Aₙ₊₁, and Aₙ₊₂, respectively, which are schematically added to Fig. 5. The meaning of the arrows Aₙ, Aₙ₊₁, and Aₙ₊₂ will be described below. For example, the positive plate of the Z-shaped busbar connecting the n-th battery cell block 5ₙ with the (n+1)-th battery cell block 5ₙ₊₁ corresponds to the lower horizontal part aₙ of arrow Aₙ, and the positive plate of the Z-shaped busbar connecting the (n+1)-th battery cell block 5ₙ₊₁ with the (n+2)-th battery cell block 5ₙ₊₂ corresponds to the lower horizontal part aₙ₊₁ of arrow Aₙ₊₁. Correspondingly, the negative plate of the Z-shaped busbar connecting the n-th battery cell block 5ₙ with the (n+1)-th battery cell block 5ₙ₊₁ corresponds to the upper horizontal part cₙ of arrow Aₙ, and the negative plate of the Z-shaped busbar connecting the (n+1)-th battery cell block 5ₙ₊₁ with the (n+2)-th battery cell block 5ₙ₊₂ corresponds to the upper horizontal part cₙ₊₁ of arrow Aₙ₊₁.

Then, the positive terminals of battery cells 50ₙ of n-th battery cell block 5ₙ serve as a current source, which supplies electric current to the positive plate of the Z-shaped busbar corresponding to arrow Aₙ, the positive plate being located at the position of lower part aₙ of the Z-shaped arrow Aₙ. Furthermore, the negative terminals of battery cells 50ₙ₊₁ of the battery cell block 5ₙ₊₁ adjacent to battery cell block 5ₙ (viewed against the direction x) are connected to the negative plate of that Z-shaped busbar. Thus, due to the electric potential established between the positive terminals of battery cells 50ₙ and the negative terminals of battery cells 50ₙ₊₁, an electric current will be established in the Z-shaped busbar connecting the positive terminals of battery cells 50ₙ and the negative terminals of battery cells 50ₙ₊₁. The direction of this electric current is indicated in Fig. 5 by arrow Aₙ, i. e., the electric current is collected at the lower part aₙ of the Z-shaped arrow Aₙ and subsequently led, via the vertical part bₙ of arrow Aₙ, to the upper part cₙ of arrow Aₙ, the position of the upper part cₙ corresponding to the position of the negative plate of the Z-shaped busbar connecting the positive terminals of battery cells 50ₙ and the negative terminals of battery cells 50ₙ₊₁.

The (n+1)-th battery cell block 5ₙ₊₁ is arranged such that its battery cells 50ₙ₊₁ are connected, with their negative terminals, to the negative plate of the Z-shaped busbar located at the position of arrow Aₙ and are further connected, with their positive terminals, to the positive plate of the Z-shaped busbar located at the position of arrow Aₙ₊₁. The latter Z-shaped busbar is connected, with its negative plate (located at the position of upper part cₙ₊₁ of arrow Aₙ₊₁), to the negative terminals of the battery cells 50ₙ₊₂ of (n+2)-th battery cell block 5ₙ₊₂. Accordingly, similar to the situation as described before concerning the Z-shaped busbar located at the position of arrow Aₙ, an electric potential established between the positive terminals of the battery cells 50ₙ₊₁ of battery cell block 5ₙ₊₁ and the negative terminals of the battery cells 50ₙ₊₂ of adjacent battery cell block 5ₙ₊₂. Caused by the latter electric potential, electric current is collected the positive plate of the Z-shaped busbar located at a position of lower part aₙ₊₁ of the Z-shaped arrow Aₙ₊₁ and subsequently led, via the vertical part bₙ₊₁ of arrow Aₙ₊₁, to the upper part cₙ₊₁ of arrow Aₙ₊₁, the position of the upper part cₙ₊₁ corresponding to the position of the negative plate of the Z-shaped busbar connecting the positive terminals of battery cells 50ₙ₊₁ and the negative terminals of battery cells 50ₙ₊₂.

A similar procedure is performed between the positive terminals of battery cell block 5ₙ₊₂ and the negative terminals of the battery cell block 5ₙ₊₃ such that electric current flows along the Z-shaped busbar located at the position of arrow Aₙ₊₂. Of course, similar procedures are also performed between further battery cell blocks (not shown) located to the right and located to the left of the shown four battery cell blocks 5ₙ, 5ₙ₊₁, 5ₙ₊₂, 5ₙ₊₃.

Figure 6 schematically illustrates the assembly of an embodiment of a battery cell stack according to the invention. Fig. 6 is a continuation of Fig. 4; specifically, steps S1 to S3 depicted in Figs. 6A - 6C are identical with the respective steps illustrated in Fig. 4. Therefore, reference signs are mostly omitted in Figs. 6A - 6C for the sake of simplicity, and regarding a description of steps S1 to S3, it is referred to the above remarks as to Fig. 4.

According to one embodiment of the method (manufacture process) for assembling the stack of battery cells according to the invention, the stack 6 of battery cell blocks (in the following also shortly referred to as "stack" 6) as shown in Figs. 4C and 6C is further stabilized by two frame beams 71, 72. The length of each of the two frame beams 71, 72 is configured to cover one of the lateral sides of the stack 6. The mounting of frame beams 71, 72 onto the stack 6 is sketched in Figs. 6D - 6F. Therefore, subsequent to steps S1, S2, and S3 described with reference to Fig. 4, a further step S4 is performed, which is illustrated in Fig. 6D. Step S4 comprises a first sub-step S41 of attaching a first frame beam 71 to the left lateral side of stack 6 (orientation as shown in the figure) and a second sub-step S42 of attaching a second frame beam 72 to the opposite right lateral side of stack 6. The process of attaching as performed in sub-steps S41 and S42 is indicated by the respective arrows in Fig. 4D.

Step S4 is also illustrated by the detailed view of Fig. 6E showing an enlarged cut-out of Fig. 6D. Again, the arrows indicate, how the left lateral side of stack 6 is connected to the first frame beam 71. The busbars of cell bricks used to compose the stack 6 (see above as to the description of Fig. 4) comprise tabs or straps 120. In case of the cell bricks corresponding to the cell brick as depicted in Figs. 1 and 2 (i. e., each of the cell bricks except for the initial cell brick 100; see the description of Fig. 4), those tabs or straps are given by straps 111 and 112 of the positive plate 11, straps 121 and 122 of the negative plate 12, and straps 131 and 132 of connection plate 13.

Corresponding to the tabs or straps 120, which each act as a male fastening means, first frame beam 71 comprises a multiplicity of slots 700, which each act as a female fastening element configured for engaging with one of the tabs or straps 120. Of course, the slots 700 are arranged at positions on the first frame beam 71 that corresponds to the positions of the tabs or straps 120 such that each of the tabs or straps 120 penetrates one of the slots 700, when the stack 6 and the first frame beam 71 are attached to each other in the intended manner. The slots 700 may be realized as flat openings in the first frame beam 71. Then, these slots 700 remain visible after the assembly of stack 6 with frame beams 71, 72 to the battery cell stack 60 as depicted in Figs. 6F and 7A. The positions of slots 700 in first frame beam 71 are also indicated in Fig. 6F.

Figures 6E and 6F explain the interplay of tabs or straps 120 the cell bricks the slots 700 of the frame beams with respect to the first frame beam 71. It is understood that a similar construction of tabs or straps configured for engaging with suitable slots is also provided for mounting the second frame beam 72 onto the stack 6.

The result of step S4 explained with reference to Figs. 6D - 6F is an embodiment of a battery cell stack 60 according to the invention as illustrated in Figure 7A. Specifically, the battery cell stack 60 shown in Fig. 7A comprises the stack 6 of the battery cell blocks as described above with reference to Figs. 4C and 6C as well as the first and second frame beam 71, 72 being attached to the lateral sides of stack 6 of battery cell blocks. The end of battery cell stack 60 being orientated into the x-direction of the depicted coordinate system is formed by the negative end busbar E2 already described above in the context of Fig. 4C. Specifically, negative end busbar E2 may serve as the negative terminal of the battery cell stack 60.

In the embodiment illustrated in Fig. 6, each Z-shaped busbar - and accordingly each cell brick - is equipped with three straps 120 on the lateral area, which are inserted into appropriate slots 700 on the crossbeam (see Fig. 7B). Then, the major structural connection may thus be established with adhesive glue material 702 (see Fig. 6F).

Figure 7B illustrates schematically a part (3-dimensional cut-out) of a frame beam 7, the frame beam 7 may be the first frame beam 71 or the second frame beam 72 as introduced in the context of Figs. 6 and 7A. The lateral sides of frame beam 7 may be strengthened by a strut construction 720 (rib-structure) comprising a multiplicity of vertical struts (directed along the z-direction of the coordinate system) and a multiplicity of horizontal struts (directed along the x-direction). One functional aspect of this strut construction 720 is to provide for an improved mechanical stability of frame beam 7. A further functional aspect of strut construction 720 is to form the multiplicity of slots 700 as already described in more detail with reference to Fig. 6.

The material of frame beam 7 is an electrically non-conducting material. It is preferred that frame beam 7 (and, accordingly, first frame beam 71 and second frame beam 72 introduced with reference to Figs. 6 and 7A) is made of high-strength plastics.

Specifically, the high-strength plastic-profile of frame beam 7 may be manufactured using established combi-processes. Hatched in Fig. 7B is a crossbeam structure 750 (H-profile) that further improves the mechanical stability of frame beam 7. The crossbeam structure 750 may be reinforced with continuous fiberglass filament (pultrusion technique). Any of the remaining structures such as the rib-structure 720, fixation points, and the joining area (slots 700) for the Z-shaped busbar interfaces (tabs or straps 120; see Fig. 6) may be formed integrally, i. e., as one piece, by conventional infection molding techniques.

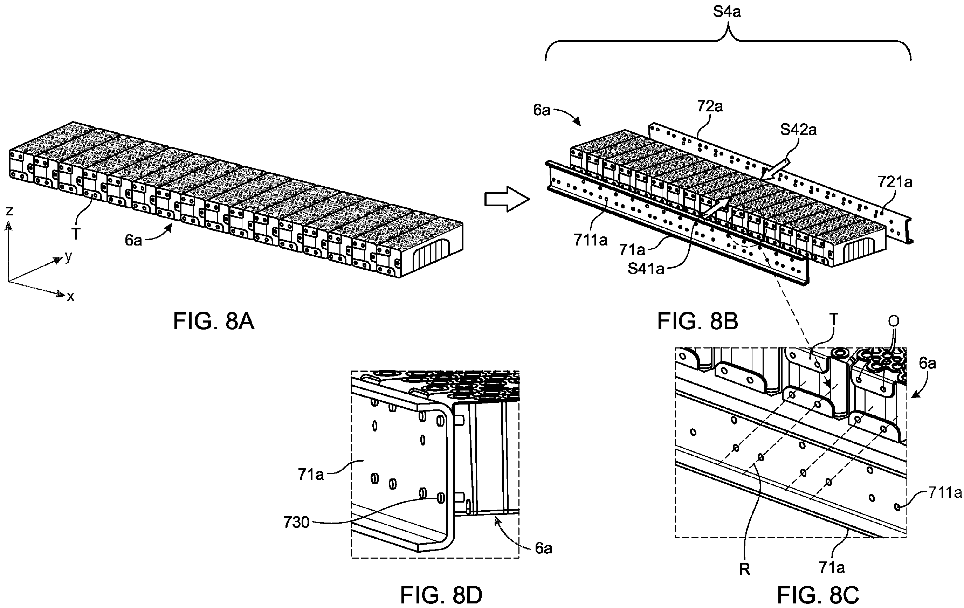

The manufacture of an alternative embodiment of a battery cell stack according to the invention will be described in the following with the help of Figure 8. Fig. 8A shows an example of a stack 6a of battery cell blocks that essentially corresponds to the stack 6 of battery cell blocks as described with reference to Figs. 4 and 6. However, the stack 6a of battery cell blocks depicted in Fig. 8A comprises cell bricks employing Z-shaped busbars with tabs or straps T being -unlike to the tabs or straps 120 shown in Fig. 6 (or the tabs or straps 111, 112, 121, 122, 131, 133 of Z-shaped busbar 1 shown in Fig. 1) - bent down with their outer tips in or against the z-direction so as to form bent notches. Each of these tabs or straps T comprises a pair of bore-holes O arranged on the respective bent notches, each of the bore-holes O being configured for receiving a rivet 730.

Further provided are a first frame beam 71a as well as a second frame beam 72a. Frame beams 71a, 72a may be made of the same material as described above for the embodiment introduced with reference to Figs. 6 and 7. The first and second frame beams 71a, 72a may each have a U-profile. Specifically, the first and second frame beams 71a, 72a each comprise a multiplicity of bore-holes 711a, 721a, which are likewise configured for receiving rivets 730. Then, the first and second frame beams 71a, 72a can be attached to the lateral sides of the stack 6a of battery modules such that the positions of the bore-holes O provided in each of the bent tabs or straps T correspond, viewed in a plane parallel to the x-z-plane of the coordinate system, to the positions of the bore-holes 711a, 721a provided in the first and second frame beams 71a, 72a. This is indicated by dashed lines R in Fig. 8C.

Then, in step S4a (that corresponds to step S4 in the manufacture process as shown in Fig. 6 with reference to the embodiment of a battery cell stack 60 illustrated in Fig. 7A) being illustrated in Fig. 8B, the first frame beam 71a is attached to the left lateral side of stack 6a in a first sub- step S41a of step S4a, and the second frame beam 72a is attached to the right lateral side of stack 6a in a second sub-step S42a of step S4a. The first sub-step S41a and the second sub-step S42a are indicated in the figure by arrows.

Figure 8C shows a cut-out of Fig. 8B, wherein details of the structure of stack 6a and of first frame beam 71a are illustrated in an enlarged view. In particular, it is indicated that the bore-holes 711a of first frame beam 71a will overlap with the bore-holes O of the bent tabs or straps T, when the first frame beam 71a becomes attached to the left lateral side of stack 6a.

Finally, Figure 8D shows the same region of the assembly as depicted in Fig. 8C, with the difference that the first frame beam 71a and the stack 6a of battery modules are in a state, in which they are attached to each other. In particular, rivets 730 have been inserted through the bore-holes 711a of first frame beam 71a and the bore-holes O of the tabs or straps T such that the first frame beam 71a is permanently fastened to the tabs of straps of the Z-shaped busbars employed in the stack 6a of battery modules of Fig. 8A.

The properties of the embodiment of Fig. 8 can be summarized as follows: Each Z-shaped busbar comprises tabs or straps having bent notches with an integrated bore-hole pattern. After an alignment of the bore-hole patterns of crossbeam and Z-shaped busbars, the fixation could be fulfilled with a simple fastening technique such as riveting.

### Reference signs

- 1: Z-shaped busbar
- 5: battery cell block
- 5ₙ, 5ₙ₊₁, 5ₙ₊₂, ...: battery cell blocks
- 6, 6a: stack of battery cell blocks
- 7: frame beam
- 10: battery cell brick
- 10₀, 10₁, 10₂, ...: battery cell bricks
- 11: positive plate
- 12: negative plate
- 13: connection plate
- 21: positive lead frame
- 22: negative lead frame
- 23: pin frame
- 50: battery cell
- 50ₙ, 50ₙ₊₁, 50ₙ₊₂, ...: battery cells
- 55: vent gas
- 60: stack of battery cells
- 71, 71a: frame beams
- 72, 72a: frame beams
- 100: busbar assembly
- 111, 112: tabs or straps
- 120: tabs or straps
- 121, 122: tabs or straps
- 131, 132: tabs or straps
- 116: openings in positive plate
- 126: openings in negative plate
- 216: openings in positive lead frame
- 216a, b, c: openings in positive lead frame
- 226: openings in negative lead frame
- 236: openings in pin frame
- 238: chamfered pins
- 700: slots
- 711a: bore-holes
- 720: strut construction / rib-structure
- 721a: bore-hole
- 730: rivets
- 750: crossbeam structure
- 1312: openings in Z-shaped busbar
- 2160: opening group
- Aₙ, Aₙ₊₁, Aₙ₊₂, ...: Z-shaped arrows
- aₙ, aₙ₊₁: parts of Z-shaped arrows
- bₙ, bₙ₊₁: parts of Z-shaped arrows
- cₙ, cₙ₊₁: parts of Z-shaped arrows
- E1: positive end busbar
- E2: negative end busbar
- L1, L3: laser beams
- O: bore-holes
- P2, P3, P4, P5: arrows
- R: dashed lines
- S1, S2, S3, S4, S4a: manufacture steps
- S11, S12: sub-steps of step S1
- S3n: sub-step of step S3
- S41, S42: sub-steps of step S4
- S41a, S42a: sub-steps of step S4a
- T: bore-holes
- x, y, z: axes of a Cartesian coordinate system

## Claims

1. An assembly set for assembling a carrier framework for a stack of battery cell blocks, the assembly set comprising:
one or more Z-shaped busbars (1);
a first frame beam (71) and a second frame beam (72);
wherein each of the Z-shaped busbars (1) comprises:
- a positive plate (11) configured for connecting to positive terminals of battery cells (50) of a battery cell block (5);
- a negative plate (12) configured for connecting to negative terminals of battery cells of a further battery cell block; and
- a connection plate (13) connecting the positive plate and the negative plate;
wherein each of the Z-shaped busbars (1) further comprises:
- a first fastening means configured for being fastened to the first frame beam (71); and
- a second fastening means configured for being fastened to the second frame
beam (72); and
wherein the first frame beam (71) comprises one or more first fastening elements such that all of the one or more Z-shaped busbars (1) can be connected with the respective first fastening means of the Z-shaped busbars to the first frame beam (71);
wherein the second frame beam (72) comprises one or more second fastening elements such that all of the one or more Z-shaped busbars (1) can be connected with the respective second fastening means of the Z-shaped busbars to the second frame beam (72);
wherein, in a state when each Z-shaped busbar is connected, with the positive plate of this Z-shaped busbar, to the positive terminals of the battery cells of one of the battery cell blocks and is further connected, with the negative plate of this Z-shaped busbar, to the negative terminals of the battery cells of another one of the battery cell blocks, the first frame beam (71) is connectable to each of the Z-shaped busbars, and wherein the second frame beam (72) is connectable to each of the Z-shaped busbars: and
wherein the connection plate (13) of each of the Z-shaped busbars (1) is configured for separating a pair of battery cell blocks, when one battery cell block (5) of the pair of battery cell blocks is connected to the positive plate (11) of the Z-shaped busbar (1) and the other battery cell block of the pair of battery cell blocks is connected to the negative plate (12) of the Z-shaped busbar (1).

2. The assembly set according to claim 1, wherein at least one of the Z-shaped busbars (1) is formed integrally.

3. The assembly set according to claims 1 or 2,
wherein for at least one of the Z-shaped busbars (1), a negative lead frame (22) is provided;
wherein the negative lead frame (22) is connectable to a side of the negative plate (12) of the Z-shaped busbar (1) being opposite to a side configured for being connected to the negative terminals of the battery cells of the further battery cell block;
wherein the negative plate (12) of this Z-shaped busbar (1) comprises a plurality of openings (126) positioned at the locations of the negative terminals of the battery cells when the further battery cell block is connected to the negative plate (12); and
wherein the negative lead frame (22) is permanently connectable, through the openings (126) in the negative plate, to the negative terminals of the battery cells when the further battery cell block is connected to the negative plate (12).

4. The assembly set of any one of claims 1 to 3,
wherein for at least one of the Z-shaped busbars (1), a positive lead frame (21) is provided;
wherein the positive lead frame (21) is connectable to a side of the positive plate (11) of this Z-shaped busbar (1) being opposite to a side configured for being connected to the positive terminals of the battery cells (50) of a battery cell block (5);
wherein the positive plate (11) of this Z-shaped busbar (1) comprises a plurality of openings (116) positioned at the locations of the positive terminals of the battery cells (50) when the battery cell block (5) is connected to the positive plate (11); and
wherein the positive lead frame (21) is permanently connectable, through the openings (116) in the positive plate (11), to the positive terminals of the battery cells (50) when the battery cell block (5) is connected to the positive plate (11).

5. The assembly set according to any one of claims 1 to 4,
wherein at least one of the positive lead frames (21) comprises a plurality of openings (216) and wherein, for each of the positive lead frames (21) comprising a plurality of openings (216), the positions of these openings (216) correspond to the positions of the openings (116) in the respective positive plate (11) of Z-shaped busbar (1) being connectable with that positive lead frame (21), when the positive lead frame (21) is connected to the positive plate (11); and/or
wherein at least one of the negative lead frames (22) comprises a plurality of openings (226) and wherein, for each of the negative lead frames (22) comprising a plurality of openings (226), the positions of these openings (226) correspond to the positions of the openings (126) in the respective negative plate (12) of Z-shaped busbar (1) being connectable with that negative lead frame (22), when the negative lead frame (22) is connected to the negative plate (12).

6. The assembly set of any one of claims 1 to 5,
wherein a plurality of first chamfered pins (238) is provided, which protrude from the positive plate (11) of at least one of the Z-shaped busbars (1) to the side of the positive plate (11) configured to be connected to the positive terminals of the battery cells (50) of the battery cell block (5), wherein the first chamfered pins (238) are positioned such that each of the first chamfered pins (238) penetrates a gap between battery cells (50), when the battery cell block (5) is connected to the positive plate (11); and/or
wherein a plurality of second chamfered pins is provided, which protrude from the negative plate of at least one of the Z-shaped busbars to the side of the negative plate configured to be connected to the negative terminals of the battery cells of the further battery cell block, wherein the second chamfered pins are positioned such that each of the second chamfered pins penetrates a gap between battery cells, when the further battery cell block is connected to the negative plate.

7. The assembly of claim 6,
wherein, for at least one of the Z-shaped busbars (1), a first pin frame (23) is provided connectable to the positive plate (11) of the Z-shaped busbar (1) or to the positive lead frame (21) connectable to the positive plate (11) of the Z-shaped busbar (1), wherein the first chamfered pins (238) protrude from the first pin frame (23), and wherein the positive plate (11) of this Z-shaped busbar (1) and the positive lead frame (21) connectable to the positive plate (11) of the Z-shaped busbar (1) each comprise bore-holes (118), through which the first chamfered pins (238) of the first pin frame (23) can be guided, when connecting the first pin frame (23) to the positive plate (11) of the Z-shaped busbar (1) or to the positive lead frame (21); and/or
wherein, for at least one of the Z-shaped busbars, a second pin frame is provided connectable to the negative plate of the Z-shaped busbar or to the negative lead frame connectable to the negative plate of the Z-shaped busbar, wherein the second chamfered pins protrude from the second pin frame, and wherein the negative plate of this Z-shaped busbar and the negative lead frame connectable to the negative plate of the Z-shaped busbar each comprise bore-holes, through which the second chamfered pins of the second pin frame can be guided, when connecting the second pin frame to the negative plate of the Z-shaped busbar or to the negative lead frame.

8. The assembly set of any one of claims 1 to 7,
wherein the first fastening means of each of the Z-shaped busbars (1) comprises a strap (111, 121, 131), and each of the first fastening elements of the first frame beam comprises a slot (700) configured for engaging with the first fastening means of any one of the Z-shaped busbars; and/or
wherein the second fastening means of each of the Z-shaped busbars (1) comprises a strap (112, 122, 132), and each of the second fastening elements of the second frame beam comprises a slot (700) configured for engaging with the second fastening means of any one of the Z-shaped busbars.

9. The assembly set of any one of claims 1 to 7, further comprising at least one rivet (730),
wherein the first fastening means of each of the Z-shaped busbars comprises at least one bore-hole (O), and each of the first fastening elements of the first frame beam comprises at least one bore-hole (711a) such that each of the first fastening elements is fixable to at least one of the first fastening means by inserting the at least one rivet (730) through the at least one bore-hole (711a) of the first fastening element and through the at least one bore-hole (O) of the first fastening means; and/or
wherein the second fastening means of each of the Z-shaped busbars comprises at least one bore-hole, and each of the second fastening elements of the second frame beam comprises at least one bore-hole such that each of the second fastening elements is fixable to at least one of the second fastening means by inserting the at least one rivet through at least one bore-hole of the second fastening element and through the at least one bore-hole of the second fastening means.

10. The assembly set of any one of claims 1 to 9, further comprising:
a positive end busbar (E1) configured for being connected to the positive terminals of the battery cells of at least one battery cell block; and/or
a negative end busbar (E2) configured for being connected to the negative terminals of the battery cells of at least one battery cell block.

11. An assembly set for assembling a stack of battery cells, comprising the assembly set for assembling a carrier framework for a stack of battery cell blocks according to any one of the previous claims, further comprising:
- for each of the Z-shaped busbars, a battery cell block being connectable, with the positive terminals of the battery cells of the battery cell block, to the positive plate of this Z-shaped busbar;
- one further battery cell block being connectable, with the negative terminals of the battery cells of that further battery cell block, to the negative plate of at least one of the Z-shaped busbars;
wherein the Z-shaped busbars and the battery cell blocks can be assembled such that each Z-shaped busbar is connected, with the positive plate of this Z-shaped busbar, to the positive terminals of the battery cells of one of the battery cell blocks and is further connected, with the negative plate of this Z-shaped busbar, to the negative terminals of the battery cells of another one of the battery cell blocks.

12. A battery cell stack comprising the assembly set for assembling a stack of battery cells according to claim 11,
wherein each Z-shaped busbar is connected, with the positive plate of this Z-shaped busbar, to the positive terminals of the battery cells of one of the battery cell blocks and is further connected, with the negative plate of this Z-shaped busbar, to the negative terminals of the battery cells of another one of the battery cell blocks; and
wherein the first frame beam (71) is connected to each of the Z-shaped busbars, and wherein the second frame beam (72) is connected to each of the Z-shaped busbars.

13. A vehicle comprising the battery cell stack according to claim 12.

14. A method for assembling a battery cell stack, the method comprising the following steps:
a) providing a multiplicity of battery cell bricks (10, 10₁, 10₂, 10₃, 10₄, 10₅), each battery cell brick (10) comprising a Z-shaped busbar (1) having a positive plate (11), a negative plate (23), and a connection plate (23), each battery cell brick (10) further comprising a battery cell block (5), wherein the positive terminals of the battery cells (50) of that battery block (5) are connected to the positive plate (11) of one of the Z-shaped busbar (1);
b) providing one further battery cell block (5₀);
c) providing a first frame beam (71) and a second frame beam (72), the first and the second frame beam each being configured for being fixed to each of the Z-shaped busbars;
d) connecting a first one of the battery cell bricks (10₁) by connecting the negative plate of the Z-shaped busbar of the first one of the battery cell bricks (10₁) to the negative terminals of the battery cells of the further battery cell block (5₀) provided in step b);
e) connecting a further one of the battery cell bricks (10₂, 10₃, 10₄, 10₅) by connecting the negative plate of the Z-shaped busbar of that further one of the battery cell bricks (10₂, 10₃, 10₄, 10₅) to the negative terminals of the battery cells of the battery cell block of the battery cell brick (10₁, 10₂, 10₃, 10₄, 10₅) that has been connected in the previous step;
f) repeating step e) until each of the battery cell bricks (10₁, 10₂, 10₃, 10₄, 10₅) is connected;
g) fixing the first frame beam (71) to each of the Z-shaped busbars and fixing the second frame beam (72) to each of the Z-shaped busbars,
wherein in steps d) and e), the first one and the further one of the battery cell bricks are connected such to the Z-shaped busbar that the first one and the further one of the battery cell bricks are separated by the connection plate (13) of the Z-shaped busbar.

## Patentansprüche

1. Montagesatz zum Zusammenbau eines Trägergerüsts für einen Stapel von Batteriezellenblöcken, wobei der Montagesatz Folgendes umfasst:
eine oder mehrere Z-förmige Sammelschienen (1);
einen ersten Rahmenträger (71) und einen zweiten Rahmenträger (72);
wobei jede der Z-förmigen Sammelschienen (1) umfasst:
- eine positive Platte (11), die zum Verbinden mit positiven Anschlüssen von Batteriezellen (50) eines Batteriezellenblocks (5) konfiguriert ist;
- eine negative Platte (12), die zum Verbinden mit negativen Anschlüssen von Batteriezellen eines weiteren Batteriezellenblocks konfiguriert ist; und
- eine Verbindungsplatte (13), die die positive Platte und die negative Platte verbindet;
wobei jede der Z-förmigen Sammelschienen (1) weiterhin umfasst:
- ein erstes Befestigungsmittel, das für die Befestigung am ersten Rahmenträger (71) konfiguriert ist; und
- ein zweites Befestigungsmittel, das für die Befestigung am zweiten Rahmenträger (72) konfiguriert ist; und
wobei der erste Rahmenträger (71) ein oder mehrere erste Befestigungselemente umfasst, so dass alle der einen oder mehreren Z-förmigen Sammelschienen (1) über die jeweiligen ersten Befestigungsmittel der Z-förmigen Sammelschienen mit dem ersten Rahmenträger (71) verbunden werden können;
wobei der zweite Rahmenträger (72) ein oder mehrere zweite Befestigungselemente umfasst, so dass alle der einen oder mehreren Z-förmigen Sammelschienen (1) über die jeweiligen zweiten Befestigungsmittel der Z-förmigen Sammelschienen mit dem zweiten Rahmenträger (72) verbunden werden können;
wobei in einem Zustand, in dem jede Z-förmige Sammelschiene über die positive Platte dieser Z-förmigen Sammelschiene mit den positiven Anschlüssen der Batteriezellen eines der Batteriezellenblöcke verbunden ist und ferner über die negative Platte dieser Z-förmigen Sammelschiene mit den negativen Anschlüssen der Batteriezellen eines anderen der Batteriezellenblöcke verbunden ist, der erste Rahmenträger (71) mit jeder der Z-förmigen Sammelschienen verbindbar ist, und wobei der zweite Rahmenträger (72) mit jeder der Z-förmigen Sammelschienen verbindbar ist; und
wobei die Verbindungsplatte (13) jeder der Z-förmigen Sammelschienen (1) konfiguriert ist, um ein Paar von Batteriezellenblöcken zu trennen, wenn ein Batteriezellenblock (5) des Paars von Batteriezellenblöcken mit der positiven Platte (11) der Z-förmigen Sammelschiene (1) verbunden ist und der andere Batteriezellenblock des Paars von Batteriezellenblöcken mit der negativen Platte (12) der Z-förmigen Sammelschiene (1) verbunden ist.

2. Montagesatz nach Anspruch 1, wobei mindestens eine der Z-förmigen Sammelschienen (1) einstückig ausgebildet ist.

3. Montagesatz nach den Ansprüchen 1 oder 2,
wobei für mindestens eine der Z-förmigen Sammelschienen (1) ein negativer Leiterrahmen (22) vorgesehen ist;
wobei der negative Leiterrahmen (22) mit einer Seite der negativen Platte (12) der Z-förmigen Sammelschiene (1) verbindbar ist, die einer Seite gegenüberliegt, die für die Verbindung mit den negativen Anschlüssen der Batteriezellen des weiteren Batteriezellenblocks konfiguriert ist;
wobei die negative Platte (12) dieser Z-förmigen Sammelschiene (1) eine Vielzahl von Öffnungen (126) aufweist, die an den Stellen der negativen Anschlüsse der Batteriezellen positioniert sind, wenn der weitere Batteriezellenblock mit der negativen Platte (12) verbunden ist; und
wobei der negative Leiterrahmen (22) durch die Öffnungen (126) in der negativen Platte dauerhaft mit den negativen Anschlüssen der Batteriezellen verbindbar ist, wenn der weitere Batteriezellenblock mit der negativen Platte (12) verbunden ist.

4. Montagesatz nach einem der Ansprüche 1 bis 3,
wobei für mindestens eine der Z-förmigen Sammelschienen (1) ein positiver Leiterrahmen (21) vorgesehen ist;
wobei der positive Leiterrahmen (21) mit einer Seite der positiven Platte (11) dieser Z-förmigen Sammelschiene (1) verbindbar ist, die einer Seite gegenüberliegt, die für die Verbindung mit den positiven Anschlüssen der Batteriezellen (50) eines Batteriezellenblocks (5) konfiguriert ist;
wobei die positive Platte (11) dieser Z-förmigen Sammelschiene (1) eine Vielzahl von Öffnungen (116) aufweist, die an den Stellen der positiven Anschlüsse der Batteriezellen (50) positioniert sind, wenn der Batteriezellenblock (5) mit der positiven Platte (11) verbunden ist; und
wobei der positive Leiterrahmen (21) durch die Öffnungen (116) in der positiven Platte (11) dauerhaft mit den positiven Anschlüssen der Batteriezellen (50) verbindbar ist, wenn der Batteriezellenblock (5) mit der positiven Platte (11) verbunden ist.

5. Montagesatz nach einem der Ansprüche 1 bis 4,
wobei mindestens einer der positiven Leiterrahmen (21) eine Vielzahl von Öffnungen (216) aufweist und wobei für jeden der positiven Leiterrahmen (21), der eine Vielzahl von Öffnungen (216) aufweist, die Positionen dieser Öffnungen (216) den Positionen der Öffnungen (116) in der jeweiligen positiven Platte (11) der Z-förmigen Sammelschiene (1) entsprechen, die mit diesem positiven Leiterrahmen (21) verbunden werden kann, wenn der positive Leiterrahmen (21) mit der positiven Platte (11) verbunden ist; und/oder
wobei mindestens einer der negativen Leiterrahmen (22) eine Vielzahl von Öffnungen (226) aufweist und wobei für jeden der negativen Leiterrahmen (22), der eine Vielzahl von Öffnungen (226) aufweist, die Positionen dieser Öffnungen (226) den Positionen der Öffnungen (126) in der jeweiligen negativen Platte (12) der Z-förmigen Sammelschiene (1) entsprechen, die mit diesem negativen Leiterrahmen (22) verbunden werden kann, wenn der negative Leiterrahmen (22) mit der negativen Platte (12) verbunden ist.

6. Montagesatz nach einem der Ansprüche 1 bis 5,
wobei eine Vielzahl von ersten abgeschrägten Stiften (238) vorgesehen ist, die von der positiven Platte (11) von mindestens einer der Z-förmigen Sammelschienen (1) zu der Seite der positiven Platte (11) vorstehen, die konfiguriert ist, um mit den positiven Anschlüssen der Batteriezellen (50) des Batteriezellenblocks (5) verbunden zu werden, wobei die ersten abgeschrägten Stifte (238) so positioniert sind, dass jeder der ersten abgeschrägten Stifte (238) in einen Spalt zwischen Batteriezellen (50) eindringt, wenn der Batteriezellenblock (5) mit der positiven Platte (11) verbunden ist; und/oder
wobei eine Vielzahl von zweiten abgeschrägten Stiften vorgesehen ist, die von der negativen Platte von mindestens einer der Z-förmigen Sammelschienen zu der Seite der negativen Platte vorstehen, die konfiguriert ist, um mit den negativen Anschlüssen der Batteriezellen des weiteren Batteriezellenblocks verbunden zu werden, wobei die zweiten abgeschrägten Stifte so positioniert sind, dass jeder der zweiten abgeschrägten Stifte in einen Spalt zwischen Batteriezellen eindringt, wenn der weitere Batteriezellenblock mit der negativen Platte verbunden ist.

7. Baugruppe nach Anspruch 6,
wobei für mindestens eine der Z-förmigen Sammelschienen (1) ein erster Stiftrahmen (23) vorgesehen ist, der mit der positiven Platte (11) der Z-förmigen Sammelschiene (1) oder mit dem mit der positiven Platte (11) der Z-förmigen Sammelschiene (1) verbindbaren positiven Leiterrahmen (21) verbindbar ist, wobei aus dem ersten Stiftrahmen (23) die ersten abgeschrägten Stifte (238) vorstehen, und wobei die positive Platte (11) dieser Z-förmigen Sammelschiene (1) und der mit der positiven Platte (11) der Z-förmigen Sammelschiene (1) verbindbare positive Leiterrahmen (21) jeweils Bohrungen (118) aufweisen, durch die die ersten abgeschrägten Stifte (238) des ersten Stiftrahmens (23) beim Verbinden des ersten Stiftrahmens (23) mit der positiven Platte (11) der Z-förmigen Sammelschiene (1) oder mit dem positiven Leiterrahmen (21) geführt werden können; und/oder
wobei für mindestens eine der Z-förmigen Sammelschienen ein zweiter Stiftrahmen vorgesehen ist, der mit der negativen Platte der Z-förmigen Sammelschiene oder mit dem mit der negativen Platte der Z-förmigen Sammelschiene verbindbaren negativen Leiterrahmen verbindbar ist, wobei die zweiten abgeschrägten Stifte aus dem zweiten Stiftrahmen vorstehen und wobei die negative Platte dieser Z-förmigen Sammelschiene und der mit der negativen Platte der Z-förmigen Sammelschiene verbindbare negative Leiterrahmen jeweils Bohrungen aufweisen, durch die die zweiten abgeschrägten Stifte des zweiten Stiftrahmens beim Verbinden des zweiten Stiftrahmens mit der negativen Platte der Z-förmigen Sammelschiene oder mit dem negativen Leiterrahmen geführt werden können.

8. Montagesatz nach einem der Ansprüche 1 bis 7,
wobei das erste Befestigungsmittel jeder der Z-förmigen Sammelschienen (1) eine Lasche (111, 121, 131) umfasst und jedes der ersten Befestigungselemente des ersten Rahmenträgers einen Schlitz (700) umfasst, der für den Eingriff mit dem ersten Befestigungsmittel einer beliebigen der Z-förmigen Sammelschienen konfiguriert ist; und/oder
wobei das zweite Befestigungsmittel jeder der Z-förmigen Sammelschienen (1) eine Lasche (112, 122, 132) umfasst, und jedes der zweiten Befestigungselemente des zweiten Rahmenträgers einen Schlitz (700) umfasst, der für den Eingriff mit dem zweiten Befestigungsmittel einer beliebigen der Z-förmigen Sammelschienen konfiguriert ist-.

9. Montagesatz nach einem der Ansprüche 1 bis 7, der außerdem mindestens eine Niete (730) umfasst,
wobei das erste Befestigungsmittel jeder der Z-förmigen Sammelschienen mindestens eine Bohrung (O) aufweist und jedes der ersten Befestigungselemente des ersten Rahmenträgers mindestens eine Bohrung (711a) aufweist, so dass jedes der ersten Befestigungselemente an mindestens einem der ersten Befestigungsmittel durch Einsetzen der mindestens einen Niete (730) durch die mindestens eine Bohrung (711a) des ersten Befestigungselements und durch die mindestens eine Bohrung (O) des ersten Befestigungsmittels befestigbar ist; und/oder
wobei das zweite Befestigungsmittel jeder der Z-förmigen Sammelschienen mindestens eine Bohrung aufweist und jedes der zweiten Befestigungselemente des zweiten Rahmenträgers mindestens eine Bohrung aufweist, so dass jedes der zweiten Befestigungselemente an mindestens einem der zweiten Befestigungsmittel durch Einsetzen der mindestens einen Niete durch mindestens eine Bohrung des zweiten Befestigungselements und durch die mindestens eine Bohrung des zweiten Befestigungsmittels befestigbar ist.

10. Montagesatz nach einem der Ansprüche 1 bis 9, der außerdem Folgendes umfasst:
eine positive Endsammelschiene (E1), die zum Verbinden mit den positiven Anschlüssen der Batteriezellen mindestens eines Batteriezellenblocks konfiguriert ist; und/oder
eine negative Endsammelschiene (E2), die zum Verbinden mit den negativen Anschlüssen der Batteriezellen mindestens eines Batteriezellenblocks konfiguriert ist.

11. Montagesatz für den Zusammenbau eines Stapels von Batteriezellen, der den Montagesatz für den Zusammenbau eines Trägerrahmens für einen Stapel von Batteriezellenblöcken nach einem der vorhergehenden Ansprüche umfasst, und der ferner Folgendes umfasst:
- für jede der Z-förmigen Sammelschienen einen Batteriezellenblock, der über die positiven Anschlüsse der Batteriezellen des Batteriezellenblocks mit der positiven Platte dieser Z-förmigen Sammelschiene verbunden werden kann;
- einen weiteren Batteriezellenblock, der über die negativen Anschlüsse der Batteriezellen dieses weiteren Batteriezellenblocks mit der negativen Platte mindestens einer der Z-förmigen Sammelschienen verbunden werden kann;
wobei die Z-förmigen Sammelschienen und die Batteriezellenblöcke so zusammengebaut werden können, dass jede Z-förmige Sammelschiene über die positive Platte dieser Z-förmigen Sammelschiene mit den positiven Anschlüssen der Batteriezellen eines der Batteriezellenblöcke verbunden ist und ferner über die negative Platte dieser Z-förmigen Sammelschiene mit den negativen Anschlüssen der Batteriezellen eines anderen der Batteriezellenblöcke verbunden ist.

12. Batteriezellenstapel, umfassend den Montagesatz zum Zusammenbau eines Batteriezellenstapels nach Anspruch 11,
wobei jede Z-förmige Sammelschiene über die positive Platte dieser Z-förmigen Sammelschiene mit den positiven Anschlüssen der Batteriezellen eines der Batteriezellenblöcke verbunden ist und ferner über die negative Platte dieser Z-förmigen Sammelschiene mit den negativen Anschlüssen der Batteriezellen eines anderen der Batteriezellenblöcke verbunden ist; und
wobei der erste Rahmenträger (71) mit jeder der Z-förmigen Sammelschienen verbunden ist, und wobei der zweite Rahmenträger (72) mit jeder der Z-förmigen Sammelschienen verbunden ist.

13. Fahrzeug, umfassend einen Batteriezellenstapel nach Anspruch 12.

14. Verfahren zum Zusammenbau eines Batteriezellenstapels, wobei das Verfahren die folgenden Schritte umfasst:
a) Bereitstellen einer Vielzahl von Batteriezellenbausteinen (10, 10₁, 10₂, 10₃, 10₄, 10₅), wobei jeder Batteriezellenbaustein (10) eine Z-förmige Sammelschiene (1), die eine positive Platte (11), eine negative Platte (23) und eine Verbindungsplatte (23) aufweist, umfasst, jeder Batteriezellenbaustein (10) ferner einen Batteriezellenblock (5) umfasst, wobei die positiven Anschlüsse der Batteriezellen (50) dieses Batteriezellenblocks (5) mit der positiven Platte (11) einer der Z-förmigen Sammelschienen (1) verbunden sind;
b) Bereitstellen eines weiteren Batteriezellenblocks (5₀);
c) Bereitstellen eines ersten Rahmenträgers (71) und eines zweiten Rahmenträgers (72), wobei der erste und der zweite Rahmenträger jeweils so konfiguriert sind, dass sie an jeder der Z-förmigen Sammelschienen befestigt werden können;
d) Verbinden eines ersten der Batteriezellenbausteine (10₁) durch Verbinden der negativen Platte der Z-förmigen Sammelschiene des ersten der Batteriezellenbausteine (10₁) mit den negativen Anschlüssen der Batteriezellen des in Schritt b) bereitgestellten weiteren Batteriezellenblocks (5₀);
e) Verbinden eines weiteren der Batteriezellenbausteine (10₂, 10₃, 10₄, 10₅) durch Verbinden der negativen Platte der Z-förmigen Sammelschiene dieses weiteren der Batteriezellenbausteine (10₂, 10₃, 10₄, 10₅) mit den negativen Anschlüssen der Batteriezellen des Batteriezellenblocks des Batteriezellenbausteins (10₁, 10₂, 10₃, 10₄, 10₅), der im vorherigen Schritt verbunden wurde;
f) Wiederholen von Schritt e), bis jeder der Batteriezellenbausteine (10₁, 10₂, 10₃, 10₄, 10₅) verbunden ist;
g) Befestigen des ersten Rahmenträgers (71) an jeder der Z-förmigen Sammelschienen und Befestigen des zweiten Rahmenträgers (72) an jeder der Z-förmigen Sammelschienen,
wobei in den Schritten d) und e) der erste und der weitere der Batteriezellenbausteine so mit der Z-förmigen Sammelschiene verbunden werden, dass der erste und der weitere der Batteriezellenbausteine durch die Verbindungsplatte (13) der Z-förmigen Sammelschiene getrennt sind.

## Revendications

1. Jeu d'assemblage pour assembler un cadre porteur pour un empilement de blocs-batterie, le jeu d'assemblage comprenant :
une ou plusieurs barres omnibus en forme de Z (1) ;
une première poutre de cadre (71) et une seconde poutre de cadre (72) ;
dans lequel chacune des barres omnibus en forme de Z (1) comprend :
- une plaque positive (11) configurée pour se raccorder aux bornes positives des éléments de batterie (50) d'un bloc-batterie (5) ;
- une plaque négative (12) configurée pour se raccorder aux bornes négatives des éléments de batterie d'un autre bloc-batterie ; et
- une plaque de raccordement (13) raccordant la plaque positive et la plaque négative ;
dans lequel chacune des barres omnibus en forme de Z (1) comprend en outre :
- un premier moyen de fixation configuré pour être fixé sur la première poutre de cadre (71) ; et
- un second moyen de fixation configuré pour être fixé sur la seconde poutre de cadre (72) ; et
dans lequel la première poutre de cadre (71) comprend un ou plusieurs premiers éléments de fixation de sorte que toutes les une ou plusieurs barres omnibus en forme de Z (1) peuvent être raccordées avec le premier moyen de fixation respectif des barres omnibus en forme de Z à la première poutre de cadre (71) ;
dans lequel la seconde poutre de cadre (72) comprend un ou plusieurs seconds éléments de fixation de sorte que toutes les une ou plusieurs barres omnibus en forme de Z (1) peuvent être raccordées avec le second moyen de fixation respectif des barres omnibus en forme de Z à la seconde poutre de cadre (72) ;
dans lequel, dans un état dans lequel chaque barre omnibus en forme de Z est raccordée, avec la plaque positive de cette barre omnibus en forme de Z, aux bornes positives des éléments de batterie de l'un des blocs-batterie et est en outre raccordée, avec la plaque négative de cette barre omnibus en forme de Z, aux bornes négatives des éléments de batterie d'un autre des blocs-batterie, la première poutre de cadre (71) peut être raccordée à chacune des barres omnibus en forme de Z, et dans lequel la seconde poutre de cadre (72) peut être raccordée à chacune des barres omnibus en forme de Z ; et
dans lequel la plaque de raccordement (13) de chacune des barres omnibus en forme de Z (1) est configurée pour séparer une paire de blocs-batterie, lorsqu'un bloc-batterie (5) de la paire de blocs-batterie est raccordé à la plaque positive (11) de la barre omnibus en forme de Z (1) et l'autre bloc-batterie de la paire de blocs-batterie est raccordé à la plaque négative (12) de la barre omnibus en forme de Z (1).

2. Jeu d'assemblage selon la revendication 1, dans lequel au moins l'une des barres omnibus en forme de Z (1) est formée de manière solidaire.

3. Jeu d'assemblage selon les revendications 1 ou 2,
dans lequel pour au moins l'une des barres omnibus en forme de Z (1), une grille de connexion négative (22) est prévue ;
dans lequel la grille de connexion négative (22) peut être raccordée à un côté de la plaque négative (12) de la barre omnibus en forme de Z (1) qui est opposé à un côté configuré pour être raccordé aux bornes négatives des éléments de batterie de l'autre bloc-batterie ;
dans lequel la plaque négative (12) de cette barre omnibus en forme de Z (1) comprend une pluralité d'ouvertures (126) positionnées aux emplacements des bornes négatives des éléments de batterie lorsque l'autre bloc-batterie est raccordé à la plaque négative (12) ; et
dans lequel la grille de connexion négative (22) peut être raccordée, de manière permanente, par le biais des ouvertures (126) dans la plaque négative, aux bornes négatives des éléments de batterie lorsque l'autre bloc-batterie est raccordé à la plaque négative (12).

4. Jeu d'assemblage selon l'une quelconque des revendications 1 à 3,
dans lequel pour au moins l'une des barres omnibus en forme de Z (1), une grille de connexion positive (21) est prévue,
dans lequel la grille de connexion positive (21) peut être raccordée à un côté de la plaque positive (11) de cette barre omnibus en forme de Z (1) qui est opposé à un côté configuré pour être raccordé aux bornes positives des éléments de batterie (50) d'un bloc-batterie (5) ;
dans lequel la plaque positive (11) de cette barre omnibus en forme de Z (1) comprend une pluralité d'ouvertures (116) positionnées aux emplacements des bornes positives des éléments de batterie (50) lorsque le bloc-batterie (5) est raccordé à la plaque positive (11) ; et
dans lequel la grille de connexion positive (21) peut être raccordée de manière permanente, par le biais des ouvertures (116) dans la plaque positive (11), aux bornes positives des éléments de batterie (50) lorsque le bloc-batterie (5) est raccordé à la plaque positive (11).

5. Jeu d'assemblage selon l'une quelconque des revendications 1 à 4,
dans lequel au moins l'une des grilles de connexion positives (21) comprend une pluralité d'ouvertures (216) et dans lequel, pour chacune des grilles de connexion positives (21) comprenant une pluralité d'ouvertures (216), les positions de ces ouvertures (216) correspondent aux positions des ouvertures (116) dans la plaque positive (11) respective de la barre omnibus en forme de Z (1) qui peut être raccordée avec cette grille de connexion positive (21), lorsque la grille de connexion positive (21) est raccordée à la plaque positive (11) ; et/ou
dans lequel au moins l'une des grilles de connexion négatives (22) comprend une pluralité d'ouvertures (226) et dans lequel, pour chacune des grilles de connexion négatives (22) comprenant une pluralité d'ouvertures (226), les positions de ces ouvertures (226) correspondent aux positions des ouvertures (126) dans la plaque négative (12) respective de la barre omnibus en forme de Z (1) qui peut être raccordée avec cette grille de connexion négative (22), lorsque la grille de connexion négative (22) est raccordée à la plaque négative (12).

6. Jeu d'assemblage selon l'une quelconque des revendications 1 à 5,
dans lequel une pluralité de premières broches chanfreinées (238) sont prévues, qui font saillie de la plaque positive (11) d'au moins l'une des barres omnibus en forme de Z (1) vers le côté de la plaque positive (11) configurée pour être raccordée aux bornes positives des éléments de batterie (50) du bloc-batterie (5), dans lequel les premières broches chanfreinées (238) sont positionnées de sorte que chacune des premières broches chanfreinées (238) pénètre dans un interstice entre les éléments de batterie (50), lorsque le bloc-batterie (5) est raccordé à la plaque positive (11) ; et/ou
dans lequel une pluralité de secondes broches chanfreinées sont prévues, qui font saillie de la plaque négative d'au moins l'une des barres omnibus en forme de Z vers le côté de la plaque négative configurée pour être raccordée aux bornes négatives des éléments de batterie de l'autre bloc-batterie, dans lequel les secondes broches chanfreinées sont positionnées de sorte que chacune des secondes broches chanfreinées pénètre dans un interstice entre les éléments de batterie, lorsque l'autre bloc-batterie est raccordé à la plaque négative.

7. Assemblage selon la revendication 6,
dans lequel, pour au moins l'une des barres omnibus en forme de Z (1), un premier cadre de broche (23) est prévu, pouvant être raccordé à la plaque positive (11) de la barre omnibus en forme de Z (1) ou à la grille de connexion positive (21) pouvant être raccordée à la plaque positive (11) de la barre omnibus en forme de Z (1), dans lequel les premières broches chanfreinées (238) font saillie du premier cadre de broche (23), et dans lequel la plaque positive (11) de cette barre omnibus en forme de Z (1) et la grille de connexion positive (21) pouvant être raccordée à la plaque positive (11) de la barre omnibus en forme de Z (1) comprennent chacune des trous d'alésage (118), à travers lesquels les premières broches chanfreinées (238) du premier cadre de broche (23) peuvent être guidées, lors du raccordement du premier cadre de broche (23) à la plaque positive (11) de la barre omnibus en forme de Z (1) ou à la grille de connexion positive (21) ; et/ou
dans lequel, pour au moins l'une des barres omnibus en forme de Z, un second cadre de broche est prévu, pouvant se raccorder à la plaque négative de la barre omnibus en forme de Z ou à la grille de connexion négative pouvant se raccorder à la plaque négative de la barre omnibus en forme de Z, dans lequel les secondes broches chanfreinées font saillie du second cadre de broche, et dans lequel la plaque négative de cette barre omnibus en forme de Z et la grille de connexion négative pouvant se raccorder à la plaque négative de la barre omnibus en forme de Z comprennent chacune des trous d'alésage, à travers lesquels les secondes broches chanfreinées du second cadre de broche peuvent être guidées, lors du raccordement du second cadre de broche à la plaque négative de la barre omnibus en forme de Z ou à la grille de connexion négative.

8. Jeu d'assemblage selon l'une quelconque des revendications 1 à 7,
dans lequel le premier moyen de fixation de chacune des barres omnibus en forme de Z (1) comprend une bande (111, 121, 131), et chacun des premiers éléments de fixation de la première poutre de cadre comprend une fente (700) configurée pour se mettre en prise avec le premier moyen de fixation de l'une quelconque des barres omnibus en forme de Z ; et/ou
dans lequel le second moyen de fixation de chacune des barres omnibus en forme de Z (1) comprend une attache (112, 122, 132), et chacun des seconds éléments de fixation de la seconde poutre de cadre comprend une fente (700) configurée pour se mettre en prise avec le second moyen de fixation de l'une quelconque des barres omnibus en forme de Z.

9. Jeu d'assemblage selon l'une quelconque des revendications 1 à 7, comprenant en outre au moins un rivet (730),
dans lequel le premier moyen de fixation de chacune des barres omnibus en forme de Z comprend au moins un trou d'alésage (O), et chacun des premiers éléments de fixation de la première poutre de cadre comprend au moins un trou d'alésage (711a) de sorte que chacun des premiers éléments de fixation peut être fixé à au moins l'un des premiers moyens de fixation en insérant l'au moins un rivet (730) à travers l'au moins un trou d'alésage (711a) du premier élément de fixation et à travers l'au moins un trou d'alésage (O) du premier moyen de fixation ; et/ou
dans lequel le second moyen de fixation de chacune des barres omnibus en forme de Z comprend au moins un trou d'alésage, et chacun des seconds éléments de fixation de la seconde poutre de cadre comprend au moins un trou d'alésage de sorte que chacun des seconds éléments de fixation peut être fixé à au moins l'un des seconds moyens de fixation en insérant l'au moins un rivet à travers au moins un trou d'alésage du second élément de fixation et à travers l'au moins un trou d'alésage du second moyen de fixation.

10. Jeu d'assemblage selon l'une quelconque des revendications 1 à 9, comprenant en outre :
une barre omnibus d'extrémité positive (E1) configurée pour être raccordée aux bornes positives des éléments de batterie d'au moins un bloc-batterie ; et/ou
une barre omnibus d'extrémité négative (E2) configurée pour être raccordée aux bornes négatives des éléments de batterie d'au moins un bloc-batterie.

11. Jeu d'assemblage pour assembler un empilement d'éléments de batterie, comprenant le jeu d'assemblage pour assembler un cadre porteur pour un empilement de blocs-batterie selon l'une quelconque des revendications précédentes, comprenant en outre :
- pour chacune des barres omnibus en forme de Z, un bloc-batterie pouvant être raccordé, avec les bornes positives des éléments de batterie du bloc-batterie, à la plaque positive de cette barre omnibus en forme de Z ;
- un autre bloc-batterie pouvant être raccordé, avec les bornes négatives des éléments de batterie de cet autre bloc-batterie, à la plaque négative d'au moins l'une des barres omnibus en forme de Z ;
dans lequel les barres omnibus en forme de Z et les blocs-batterie peuvent être assemblés de sorte que chaque barre omnibus en forme de Z est raccordée, avec la plaque positive de cette barre omnibus en forme de Z, aux bornes positives des éléments de batterie de l'un des blocs-batterie et est en outre raccordée, avec la plaque négative de cette barre omnibus en forme de Z, aux bornes négatives des éléments de batterie d'un autre des blocs-batterie.

12. Empilement d'éléments de batterie comprenant le jeu d'assemblage pour assembler un empilement d'éléments de batterie selon la revendication 11,
dans lequel chaque barre omnibus en forme de Z est raccordée, avec la plaque positive de cette barre omnibus en forme de Z, aux bornes positives des éléments de batterie de l'un des blocs-batterie et est en outre raccordée, avec la plaque négative de cette barre omnibus en forme de Z, aux bornes négatives des éléments de batterie d'un autre des blocs-batterie ; et
dans lequel la première poutre de cadre (71) est raccordée à chacune des barres omnibus en forme de Z, et dans lequel la seconde poutre de cadre (72) est raccordée à chacune des barres omnibus en forme de Z.

13. Véhicule comprenant l'empilement d'éléments de batterie selon la revendication 12.

14. Procédé pour assembler un empilement d'éléments de batterie, le procédé comprenant les étapes suivantes consistant à :
a) prévoir une pluralité de briques d'éléments de batterie (10, 10₁, 10₂, 10₃, 10₄, 10₅), chaque brique d'éléments de batterie (10) comprenant une barre omnibus en forme de Z (1) ayant une plaque positive (11), une plaque négative (23) et une plaque de raccordement (23), chaque brique d'éléments de batterie (10) comprenant en outre un bloc-batterie (5), où les bornes positives des éléments de batterie (50) du bloc-batterie (5) sont raccordées à la plaque positive (11) de l'une des barres omnibus en forme de Z (1) ;
b) prévoir un autre bloc-batterie (5₀) ;
c) prévoir une première poutre de cadre (71) et une seconde poutre de cadre (72), la première et la seconde poutre de cadre étant chacune configurées pour être fixées à chacune des barres omnibus en forme de Z ;
d) raccorder une première des briques d'éléments de batterie (10₁) en raccordant la plaque négative de la barre omnibus en forme de Z de la première des briques d'éléments de batterie (10₁) aux bornes négatives des éléments de batterie de l'autre bloc-batterie (5₀) prévu à l'étape b) ;
e) raccorder une autre des briques d'éléments de batterie (10₂, 10₃, 10₄, 10₅) en raccordant la plaque négative de la barre omnibus en forme de Z de cette autre des briques d'éléments de batterie (10₂, 10₃, 10₄, 10₅) aux bornes négatives des éléments de batterie du bloc-batterie de la brique d'éléments de batterie (10₁, 10₂, 10₃, 10₄, 10₅) qui a été raccordée à l'étape précédente ;
f) répéter l'étape e) jusqu'à ce que chacune des briques d'éléments de batterie (10₁, 10₂, 10₃, 10₄, 10₅) soit raccordée ;
g) fixer la première poutre de cadre (71) à chacune des barres omnibus en forme de Z et fixer la seconde poutre de cadre (72) à chacune des barres omnibus en forme de Z,
dans lequel aux étapes d) et e), la première et l'autre des briques d'éléments de batterie sont raccordées de telle manière à la barre omnibus en forme de Z que la première et l'autre des briques d'éléments de batterie sont séparées par la plaque de raccordement (13) de la barre omnibus en forme de Z.
